# EUROPEAN PATENT APPLICATION

(11) **EP 4 564 303 A1**
(43) Date of publication of application: **04.06.2025**
(21) Application number: 23851392.3
(22) Date of filing: 26.06.2023
(51) Int. Cl.: G06T 17/00, G06T 19/00

(54) **3D MODEL GENERATING METHOD AND SYSTEM, AND ELECTRONIC DEVICE**

(30) Priority: 12.08.2022 CN 202210970068
(71) Applicant: Huawei Technologies Co., Ltd., Shenzhen, Guangdong 518129 (CN)
(72) Inventor: CAO, Dawei, Shenzhen, Guangdong 518129 (CN); CAI, Bo, Shenzhen, Guangdong 518129 (CN); ZHANG, Sen, Shenzhen, Guangdong 518129 (CN); XU, Ziya, Shenzhen, Guangdong 518129 (CN)
(74) Representative: Eisenführ Speiser
(86) International application number: PCT/CN2023/102321
(87) International publication number: WO 2024/032165

(57) **Abstract**

Embodiments of this application provide a 3D model generation method and system, and an electronic device. The method includes: obtaining, based on a missing region of an initial 3D model of a target object, a camera pose sequence for performing photographing on the target object, where the initial 3D model is obtained by performing 3D modeling based on a first image sequence, and the first image sequence is obtained by performing photographing around the target object; then obtaining a second image sequence, where the second image sequence is an image sequence obtained by performing photographing on the target object based on the camera pose sequence; and then filling the missing region of the initial 3D model based on the second image sequence, to generate a target 3D model. In this way, there is no need to perform photographing around the target object again, and there is no need to perform remodeling, and efficiency is high. In addition, the second image sequence can cover a region that is on a surface of the target object and that corresponds to the missing region of the initial 3D model, so that the target 3D model without the missing region can be generated.

## Description

This application claims priority to Chinese Patent Application No. 202210970068.7, filed with the China National Intellectual Property Administration on August 12, 2022 and entitled "3D MODEL GENERATION METHOD AND SYSTEM, AND ELECTRONIC DEVICE", which is incorporated herein by reference in its entirety.

### TECHNICAL FIELD

Embodiments of this application relate to the data processing field, and in particular, to a 3D model generation method and system, and an electronic device.

### BACKGROUND

One of 3-Dimension (3-Dimension, 3D) modeling manners is to perform photographing around an object, to obtain an image sequence, and then perform 3D modeling based on the picture sequence, to obtain a 3D model of the object. In most cases, the picture sequence obtained by performing photographing around the object cannot completely cover a full picture of the object. As a result, necessary information of an uncovered region lacks in a 3D modeling process, and the region is missing. Finally, the 3D model is incomplete.

In the conventional technology, after it is determined that the 3D model is incomplete, a photographing range of the object is expanded, photographing is performed on the object again, to obtain a new picture sequence, and then remodeling is performed based on the new picture sequence. However, even if the photographing range of the object is expanded, it cannot be ensured that the new picture sequence obtained through photographing completely covers the full picture of the object. As a result, a 3D model obtained through remodeling may be incomplete. In addition, a process of performing scanning and photographing and remodeling by expanding the photographing range is time-consuming and labor-consuming.

### SUMMARY

To resolve a problem in the conventional technology that it is time-consuming and labor-consuming to generate a 3D model without a missing region by re-photographing around a target object to obtain an image sequence and performing 3D modeling again when there is the missing region in the 3D model, this application provides a 3D model generation method and system, and an electronic device. According to the method, supplementary photographing can be performed on a target object, and a missing region of an initial 3D model is filled by using an image obtained through the supplementary photographing, to obtain a target 3D model without the missing region. There is no need to re-photograph the target object, and there is no need to perform remodeling, and efficiency is high.

According to a first aspect, an embodiment of this application provides a 3D model generation method. The method includes: obtaining, based on a missing region of an initial 3D model of a target object, a camera pose sequence for photographing the target object, where the initial 3D model is obtained by performing 3D modeling based on a first image sequence, and the first image sequence is obtained by photographing around the target object; then obtaining a second image sequence, where the second image sequence is an image sequence obtained by performing photographing on the target object based on the camera pose sequence; and then filling the missing region of the initial 3D model based on the second image sequence, to generate a target 3D model.

Because the camera pose sequence for photographing the target object is determined based on the missing region of the initial 3D model, it can be ensured that the photographed second image sequence can cover a region that is on a surface of the target object and that corresponds to the missing region of the initial 3D model, and further, the missing region of the initial 3D model is filled based on the photographed second image sequence, so that the target 3D model without the missing region can be generated. Compared with the conventional technology, in this application, only the image sequence that can cover the region that is on the surface of the target object and that corresponds to the missing region of the initial 3D model needs to be photographed (that is, the image sequence obtained by performing supplementary photographing on the region that is on the surface of the target object and that corresponds to the missing region of the initial 3D model). Fewer images need to be photographed, thereby shortening photographing time. Compared with remodeling in the conventional technology, in this application, fewer images are required for filling the missing region of the initial 3D model. Therefore, a calculation amount for generating the target 3D model is smaller, and efficiency of generating the target 3D model without the missing region is higher.

For example, the target object may be all entities such as an object, an animal, and a person. This is not limited in this application. The entities usually refer to things that exist objectively and can be distinguished from each other.

For example, the initial 3D model is a grid model, and may include a plurality of vertices, a plurality of triangular faces, and a plurality of texture maps. The triangular face is formed by connecting three vertices end to end, one triangular face may be considered as one grid, and one triangular face corresponds to one texture map.

For example, the camera pose sequence may include one or more camera poses, and each camera pose may include a camera orientation and a photographing distance.

It should be noted that a camera in this application may be a terminal device including a camera, for example, a mobile terminal (for example, a mobile phone or a tablet computer), a camera, or a camera itself. This is not limited in this application. The camera may be an RGB (Red (red), Green (green), Blue (blue)) camera, or may be a depth camera. This is not limited in this application.

It should be noted that the 3D model generation method in this application may be independently performed by a terminal device, may be independently performed by a server, or may be collaboratively performed by the server and the terminal device. This is not limited in this application.

For example, the first image sequence may include a plurality of first images, and the plurality of first images correspond to different photographing angles of view.

For example, the second image sequence may include one or more second images. When the second image sequence includes a plurality of second images, photographing angles of view corresponding to the plurality of second images are different.

For example, the initial 3D model may include one or more missing regions.

According to the first aspect, the obtaining, based on a missing region of an initial 3D model of a target object, a camera pose sequence for photographing the target object includes: determining a first camera pose based on a center of the missing region; and determining the camera pose sequence based on the first camera pose.

In this way, when the initial 3D model includes one or more small missing regions (the small missing region is a missing region whose quantity of edge vertices is less than a quantity threshold), one first camera pose is determined for one missing region, and subsequently, for a region that is on the surface of the target object and that corresponds to the missing region of the initial 3D model, only one second image needs to be photographed, thereby greatly shortening the photographing time and improving the efficiency of generating the target 3D model.

According to the first aspect or any implementation of the first aspect, the initial 3D model includes a plurality of vertices, and the plurality of vertices include a plurality of edge vertices located at edges of the missing region; and the obtaining, based on a missing region of an initial 3D model of a target object, a camera pose sequence for photographing the target object includes: determining a first camera pose based on a center of the missing region; and determining a plurality of second camera poses based on the plurality of edge vertices, where one edge vertex correspondingly determines one second camera pose; and the determining the camera pose sequence based on the first camera pose includes: determining the camera pose sequence based on the first camera pose and the plurality of second camera poses.

In this way, when the initial 3D model includes a large missing region (the large missing region is a missing region whose quantity of edge vertices is greater than or equal to a quantity threshold), it can be ensured that the second image sequence subsequently obtained through photographing based on the camera pose sequence can cover the region that is on the surface of the target object and that corresponds to the missing region of the initial 3D model.

It should be noted that, when there are a plurality of missing regions in the initial 3D model, and the plurality of missing regions include a large missing region and a small missing region, if an included angle of view of any two missing regions in the plurality of missing regions (an included angle between a line segment 1 obtained by connecting a center of one missing region and a center of the initial 3D model and a line segment 2 obtained by connecting a center of the other missing region and the center of the initial 3D model) is less than an angle of view threshold (which may be specifically set based on a requirement, and is not limited in this application), a minimum circumcircle including all missing regions may be determined, then a photographing center is determined based on centers of the plurality of missing regions, and then a first camera pose is determined based on the photographing center. A plurality of points are selected from the minimum circumcircle, and a plurality of second camera poses are determined based on the plurality of points of the minimum circumcircle, where one point of the minimum circumcircle correspondingly determines one second camera pose. Then, the camera pose sequence is determined based on the first camera pose and the plurality of second camera poses.

When there are a plurality of missing regions in the initial 3D model, and the plurality of missing regions include a large missing region and a small missing region, if there are two missing regions whose included angle of view is greater than an angle of view threshold in the plurality of missing regions, based on an included angle of view of every two missing regions in the plurality of missing regions, a plurality of regions are divided. One region may include one or more missing regions (when one region includes a plurality of missing regions, an included angle of view of any two missing regions in the plurality of missing regions included in the region is less than the included angle threshold). Then, for each region, a minimum circumcircle including all missing regions in the region may be determined, then a photographing center is determined based on centers of the plurality of missing regions included in the region, and then a first camera pose is determined based on the photographing center. A plurality of points are selected from the minimum circumcircle, and a plurality of second camera poses are determined based on the plurality of points of the minimum circumcircle, where one point of the minimum circumcircle correspondingly determines one second camera pose. Then, the camera pose sequence is determined based on the first camera pose and the plurality of second camera poses.

According to the first aspect or any implementation of the first aspect, the obtaining, based on a missing region of an initial 3D model of a target object, a camera pose sequence for photographing the target object further includes: selecting a first edge vertex from the plurality of edge vertices; determining a plurality of third camera poses based on the first camera pose and a second camera pose corresponding to the first edge vertex, where the third camera pose is a pose in which a camera moves between a first position and a second position to perform photographing, the first position is a camera position determined based on the first camera pose, and the second position is a camera position determined based on the second camera pose corresponding to the first edge vertex; and the determining the camera pose sequence based on the first camera pose and the plurality of second camera poses includes: determining the camera pose sequence based on the first camera pose, the plurality of second camera poses, and the plurality of third camera poses.

In this way, on one hand, smoothness of an entire supplementary photographing process, namely, smoothness of the camera moving from the first position to any second position or moving from any second position to the first position to perform the supplementary photographing can be ensured. On the other hand, a quantity of second images included in the second image sequence may be increased, and further, after the missing region of the initial 3D model is filled based on the second image sequence including more second images, details of a region that is in the target 3D model and that corresponds to the missing region of the initial 3D model are more authentic.

For example, one or more first edge vertices may be selected from the plurality of edge vertices. The first edge vertices all can determine the plurality of third camera poses.

It should be understood that, when there are the plurality of missing regions in the initial 3D model, and the plurality of missing regions include the large missing region and the small missing region, the first edge vertex may also be selected from the plurality of points of the minimum circumcircle, then the plurality of third camera poses are determined based on the first camera pose determined based on the photographing center and the second camera pose corresponding to the first edge vertex, and then the camera pose sequence is determined based on the first camera pose, the plurality of second camera poses, and the plurality of third camera poses.

According to the first aspect or any implementation of the first aspect, the determining a plurality of third camera poses based on the first camera pose and a second camera pose corresponding to the first edge vertex includes: determining, based on the initial 3D model, the first position, and the second position, a moving trajectory of the camera between the first position and the second position; and determining the plurality of third camera poses based on a plurality of trajectory points on the moving trajectory, where one trajectory point on the moving trajectory correspondingly determines one third camera pose. In this way, the supplementary photographing can be performed when the camera moves from the first position to any second position, or moves from any second position to the first position.

According to the first aspect or any implementation of the first aspect, the initial 3D model includes the plurality of vertices, the plurality of vertices include the plurality of edge vertices located at the edges of the missing region, and the first camera pose includes a first camera orientation and a first photographing distance; and the determining a first camera pose based on a center of the missing region includes: determining the center of the missing region based on the plurality of edge vertices; determining the first camera orientation based on a direction from the center of the missing region to the center of the initial 3D model; and determining the first photographing distance based on the photographing distance corresponding to the first image sequence.

In a possible manner, the photographing distance corresponding to the first image sequence (namely, a photographing distance corresponding to each first image in the first image sequence (namely, a distance between the camera and the target object when the first image is photographed)) is obtained, and then an average value of photographing distances corresponding to some or all first images in the first image sequence is used as the first photographing distance. In a possible manner, a photographing distance corresponding to any first image in the first image sequence is obtained as the first photographing distance. It should be understood that how to determine the first photographing distance based on the photographing distance corresponding to the first image sequence is not limited in this application.

According to the first aspect or any implementation of the first aspect, the second camera pose includes a second camera orientation and a second photographing distance; and the determining a plurality of second camera poses based on the plurality of edge vertices includes: selecting a second edge vertex from the plurality of edge vertices; determining the second camera orientation based on a direction from the second edge vertex to a center of the initial 3D model; and determining the second photographing distance based on a photographing distance corresponding to the first image sequence.

In a possible manner, the photographing distance corresponding to the first image sequence (namely, a photographing distance corresponding to each first image in the first image sequence (namely, a distance between the camera and the target object when the first image is photographed)) is obtained, and then an average value of photographing distances corresponding to some or all first images in the first image sequence is obtained, and is used as the second photographing distance. In a possible manner, a photographing distance corresponding to any first image in the first image sequence is obtained as the second photographing distance. It should be understood that how to determine the second photographing distance based on the photographing distance corresponding to the first image sequence is not limited in this application.

For example, all edge vertices may be determined as the second edge vertex, or some edge vertices may be determined as the second edge vertex. This is not limited in this application.

According to the first aspect or any implementation of the first aspect, the method further includes: performing rendering based on the camera pose sequence and the initial 3D model, to obtain a plurality of first rendered images, where one first rendered image corresponds to one photographing angle of view, and one photographing angle of view corresponds to one camera pose in the camera pose sequence; marking contours of the target object in the plurality of first rendered images, to obtain a plurality of second rendered images, where the second rendered image includes a contour marking line; and adjusting transparency of regions framed by the contour marking lines in the plurality of second rendered images to a preset value, to obtain a plurality of third rendered images, where the preset value is between minimum transparency and maximum transparency, and the second image sequence is the image sequence obtained by performing the supplementary photographing on the target object based on the plurality of third rendered images.

The third rendered image includes the contour marking line, and the region framed by the contour marking line has specific transparency (surface information of the target object can be retained to some extent). Therefore, subsequently, based on the third rendered image, a user can be effectively guided to perform the supplementary photographing based on the camera pose in the foregoing determined camera pose sequence (for example, the third rendered image is displayed on a photographing interface), so that the second image sequence obtained by performing the supplementary photographing on the target object can cover the region that is on the target object and that corresponds to the missing region of the initial 3D model.

According to the first aspect or any implementation of the first aspect, the filling the missing region of the initial 3D model based on the second image sequence, to generate a target 3D model includes: generating a second 3D point cloud based on the second image sequence; and filling the missing region of the initial 3D model based on the second 3D point cloud, to generate the target 3D model. The initial 3D model includes a first 3D point cloud (the vertices included in the initial 3D model may form the first 3D point cloud, and the first 3D point cloud is generated based on the first image sequence). Further, based on the second 3D point cloud, the missing region of the initial 3D model can be effectively filled.

According to the first aspect or any implementation of the first aspect, the initial 3D model includes the plurality of vertices, the plurality of vertices form a first 3D point cloud, the first 3D point cloud is generated based on the first image sequence, and the plurality of vertices include the plurality of edge vertices located at the edges of the missing region; and the filling the missing region of the initial 3D model based on the second 3D point cloud, to generate the target 3D model includes: performing point cloud fusion on the second 3D point cloud and the first 3D point cloud, to obtain an intermediate 3D model, where the intermediate 3D model includes a third 3D point cloud, the third 3D point cloud is located in a missing region of the intermediate 3D model, and the third 3D point cloud is a subset of the second 3D point cloud; gridding the plurality of edge vertices and a plurality of points included in the third 3D point cloud; and generating the target 3D model based on a gridded intermediate 3D model.

According to the first aspect or any implementation of the first aspect, the initial 3D model includes the plurality of vertices and a plurality of triangular faces, and the triangular face is formed by connecting three vertices end to end, and the method further includes: when the initial 3D model includes a side used by only one triangular face, or the initial 3D model includes a vertex whose quantity of corresponding sides is not equal to a quantity of corresponding triangular faces, determining that there is a missing region in the initial 3D model. In this way, whether there is the missing region in the initial 3D model can be accurately detected.

According to the first aspect or any implementation of the first aspect, the missing region includes a hole.

For example, the hole may be a region that has no grid and no texture map on the 3D model.

According to a second aspect, an embodiment of this application provides a 3D model generation method. The method includes: displaying a first prompt interface when there is a missing region in an initial 3D model of a target object, where the first prompt interface is used to ask a user whether to perform supplementary photographing on the target object, the initial 3D model is obtained by performing 3D modeling based on a first image sequence, and the first image sequence is obtained by photographing the target object; displaying prompt information in response to a first confirmation operation, where the prompt information is used to guide the user to photograph the target object, the prompt information is generated based on a camera pose sequence for photographing the target object, and the camera pose sequence is determined based on the missing region of the initial 3D model; photographing a second image sequence for the target object in response to a photographing operation; and displaying a target 3D model, where the target 3D model is obtained by filling the missing region of the initial 3D model based on the second image sequence.

In this way, when there is the missing region in the initial 3D model, the user adjusts a pose of a camera of a terminal device based on guidance of the terminal device, to ensure that the second image sequence obtained through photographing can cover a region that is on a surface of the target object and that corresponds to the missing region of the initial 3D model. Therefore, it can be ensured that the target 3D model without the missing region can be obtained by performing supplementary photographing once. In addition, compared with the conventional technology, the user needs to photograph fewer images, thereby shortening photographing time. Compared with remodeling in the conventional technology, in this application, fewer images are required for filling the missing region of the initial 3D model. Therefore, a calculation amount for generating the target 3D model is smaller, the efficiency of generating the target 3D model without the missing region is higher, time for the user to wait for displaying the target 3D model is less, and user experience can be improved.

According to a second aspect, the prompt information includes a first rendered image, the first rendered image includes a contour marking line of the target object, transparency of a region framed by the contour marking line is a preset value, the preset value is between minimum transparency and maximum transparency, and the first rendered image is generated based on a second rendered image that is obtained by performing rendering based on the camera pose sequence and the initial 3D model; and the displaying prompt information includes: displaying the first rendered image on a photographing interface.

For example, the first rendered image according to the second aspect is the third rendered image according to the first aspect and any implementation of the first aspect, and the second rendered image according to the second aspect is the first rendered image according to the first aspect and any implementation of the first aspect.

According to the second aspect or any implementation of the second aspect, transparency of a region outside the region framed by the contour marking line in the first rendered image is the maximum transparency. In this way, after the first rendered image is displayed on the photographing interface, the region outside the region framed by the contour marking line in the first rendered image can display an image captured by the camera of the terminal device, which may provide a reference for the user, and can help the user quickly and effectively adjust the pose of the camera of the terminal device.

According to the second aspect or any implementation of the second aspect, the method further includes: displaying a second prompt interface after the second image sequence is photographed, where the second prompt interface is used to ask the user whether to fill the missing region of the initial 3D model; and the displaying a target 3D model includes: displaying the target 3D model in response to a second confirmation operation. In this way, after the user agrees to fill the missing region of the initial 3D model, a filling operation is performed to generate the target 3D model, so that computing resources of the terminal device can be saved.

The second aspect and any implementation of the second aspect correspond to the first aspect and any implementation of the first aspect respectively. For technical effect corresponding to the second aspect and any implementation of the second aspect, refer to technical effect corresponding to the first aspect and any implementation of the first aspect. Details are not described herein again.

According to a third aspect, an embodiment of this application provides a 3D model generation system. The 3D model generation system includes a terminal device and a server, where the server obtains, based on a missing region of an initial 3D model of a target object, a camera pose sequence for photographing the target object, where the initial 3D model is obtained by performing 3D modeling based on a first image sequence, and the first image sequence is obtained by photographing around the target object; and sends the camera pose sequence to the terminal device; the terminal device photographs a second image sequence of the target object based on the camera pose sequence; and sends the second image sequence to the server; the server fills the missing region of the initial 3D model based on the second image sequence, to generate a target 3D model; and sends the target 3D model to the terminal device; and the terminal device displays the target 3D model.

The third aspect and any implementation of the third aspect correspond to the first aspect and any implementation of the first aspect respectively. For technical effect corresponding to the third aspect and any implementation of the third aspect, refer to the technical effect corresponding to the first aspect and any implementation of the first aspect. Details are not described herein again.

According to a fourth aspect, an embodiment of this application provides an electronic device, including a memory and a processor, where the memory is coupled to the processor; and the memory stores program instructions, and when the program instructions are executed by the processor, the electronic device is enabled to perform the 3D model generation method according to the first aspect or any possible implementation of the first aspect.

For example, the electronic device according to the fourth aspect and any implementation of the fourth aspect may be a server or a terminal device.

The fourth aspect and any implementation of the fourth aspect correspond to the first aspect and any implementation of the first aspect respectively. For technical effect corresponding to the fourth aspect and any implementation of the fourth aspect, refer to the technical effect corresponding to the first aspect and any implementation of the first aspect. Details are not described herein again.

According to a fifth aspect, an embodiment of this application provides an electronic device, including a memory and a processor, where the memory is coupled to the processor; and the memory stores program instructions, and when the program instructions are executed by the processor, the electronic device is enabled to perform the 3D model generation method according to the second aspect or any possible implementation of the second aspect.

For example, the electronic device according to the fifth aspect and any implementation of the fifth aspect may be a terminal device.

The fifth aspect and any implementation of the fifth aspect correspond to the second aspect and any implementation of the second aspect respectively. For technical effect corresponding to the fifth aspect and any implementation of the fifth aspect, refer to the technical effect corresponding to the second aspect and any implementation of the second aspect. Details are not described herein again.

According to a sixth aspect, an embodiment of this application provides a chip, including one or more interface circuits and one or more processors, where the interface circuit is configured to: receive a signal from a memory of an electronic device, and send the signal to the processor, the signal includes computer instructions stored in the memory, and when the processor executes the computer instructions, the electronic device is enabled to perform the 3D model generation method according to the first aspect or any possible implementation of the first aspect.

The sixth aspect and any implementation of the sixth aspect correspond to the first aspect and any implementation of the first aspect respectively. For technical effect corresponding to the sixth aspect and any implementation of the sixth aspect, refer to the technical effect corresponding to the first aspect and any implementation of the first aspect. Details are not described herein again.

According to a seventh aspect, an embodiment of this application provides a chip, including one or more interface circuits and one or more processors, where the interface circuit is configured to: receive a signal from a memory of an electronic device, and send the signal to the processor, the signal includes computer instructions stored in the memory, and when the processor executes the computer instructions, the electronic device is enabled to perform the 3D model generation method according to the second aspect or any possible implementation of the second aspect.

The seventh aspect and any implementation of the seventh aspect correspond to the second aspect and any implementation of the second aspect respectively. For technical effect corresponding to the seventh aspect and any implementation of the seventh aspect, refer to the technical effect corresponding to the second aspect and any implementation of the second aspect. Details are not described herein again.

According to an eighth aspect, an embodiment of this application provides a computer-readable storage medium, where the computer-readable storage medium stores a computer program, and when the computer program is run on a computer or a processor, the computer or the processor is enabled to perform the 3D model generation method according to the first aspect or any possible implementation of the first aspect.

The eighth aspect and any implementation of the eighth aspect correspond to the first aspect and any implementation of the first aspect respectively. For technical effect corresponding to the eighth aspect and any implementation of the eighth aspect, refer to the technical effect corresponding to the first aspect and any implementation of the first aspect. Details are not described herein again.

According to a ninth aspect, an embodiment of this application provides a computer-readable storage medium, where the computer-readable storage medium stores a computer program, and when the computer program is run on a computer or a processor, the computer or the processor is enabled to perform the 3D model generation method according to the second aspect or any possible implementation of the second aspect.

The ninth aspect and any implementation of the ninth aspect correspond to the second aspect and any implementation of the second aspect respectively. For technical effect corresponding to the ninth aspect and any implementation of the ninth aspect, refer to the technical effect corresponding to the second aspect and any implementation of the second aspect. Details are not described herein again.

According to a tenth aspect, an embodiment of this application provides a computer program product, where the computer program product includes a software program, and when the software program is executed by a computer or a processor, the computer or the processor is enabled to perform the 3D model generation method according to the first aspect or any possible implementation of the first aspect.

The tenth aspect and any implementation of the tenth aspect correspond to the first aspect and any implementation of the first aspect respectively. For technical effect corresponding to the tenth aspect and any implementation of the tenth aspect, refer to the technical effect corresponding to the first aspect and any implementation of the first aspect. Details are not described herein again.

According to an eleventh aspect, an embodiment of this application provides a computer program product, where the computer program product includes a software program, and when the software program is executed by a computer or a processor, the computer or the processor is enabled to perform the 3D model generation method according to the second aspect or any possible implementation of the second aspect.

The eleventh aspect and any implementation of the eleventh aspect correspond to the second aspect and any implementation of the second aspect respectively. For technical effect corresponding to the eleventh aspect and any implementation of the eleventh aspect, refer to the technical effect corresponding to the second aspect and any implementation of the second aspect. Details are not described herein again.

### BRIEF DESCRIPTION OF DRAWINGS

FIG. 1a is a diagram of an example of an application scenario;
FIG. 1b is a diagram of an example of an application scenario;
FIG. 1c is a diagram of an example of an application scenario;
FIG. 1d is a diagram of an example of 3D models;
FIG. 1e is a diagram of an example of a hardware structure of a 3D model generation system;
FIG. 2 is a diagram of an example of a 3D model generation process;
FIG. 3 is a diagram of an example of grid structures of 3D models;
FIG. 4a is a diagram of an example of a 3D model generation process;
FIG. 4b is a diagram of an example of a camera pose determining process;
FIG. 4c is a diagram of an example of a camera pose determining process;
FIG. 4d is a diagram of an example of first rendered images at different photographing angles of view;
FIG. 4e is a diagram of an example of a gridding process;
FIG. 5 is a diagram of an example of a 3D model generation process;
FIG. 6a is a diagram of an example of 3D models;
FIG. 6b is a diagram of an example of 3D models;
FIG. 7 is a diagram of an example of a 3D model generation process;
FIG. 8a is a diagram of an example of a first prompt interface;
FIG. 8b is a diagram of an example of a photographing interface;
FIG. 8c is a diagram of an example of a second prompt interface; and
FIG. 9 is a diagram of an example of an apparatus.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

A term "and/or" in this specification describes only an association relationship between associated objects and indicates that three relationships may exist. For example, A and/or B may indicate the following three cases: Only A exists, both A and B exist, and only B exists.

In the specification and the claims in embodiments of this application, terms "first", "second", and the like are intended to distinguish between different objects but do not indicate a specific sequence of the objects. For example, a first target object, a second target object, and the like are intended to distinguish between different target objects, but do not indicate a specific sequence of the target objects.

In embodiments of this application, words such as "example" or "for example" are used to indicate giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a relative concept in a specific manner.

In the description of embodiment of this application, unless otherwise stated, "a plurality of" means two or more. For example, a plurality of processing units are two or more processing units, and a plurality of systems are two or more systems.

In this application, an example in which a missing region is a hole is used for description.

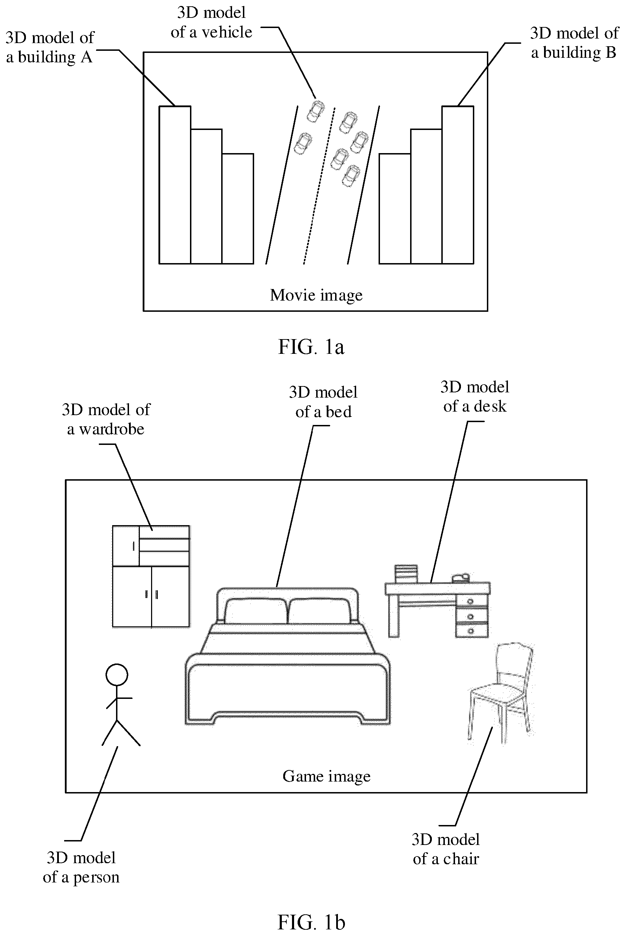

FIG. 1a is a diagram of an example of an application scenario. In the embodiment in FIG. 1a, that 3D modeling is applied to a movie scenario is described.

For example, the 3D modeling usually needs to be used for a science fiction movie. For example, the 3D modeling is used to construct a 3D model of an object (including a person and/or an object) in an image background, so that a movie image is more vivid. For example, the 3D modeling is used to construct a 3D model of a building A, a 3D model of a building B, a 3D model of a vehicle, and the like, and then the 3D model of the building A, the 3D model of the building B, the 3D model of the vehicle, and the like are displayed in the movie image, as shown in FIG. 1a. It should be noted that, in FIG. 1a, a bar chart indicates the 3D model, which is merely an example of the scenario, and does not indicate a 3D model shown in a real movie image.

FIG. 1b is a diagram of an example of an application scenario. In the embodiment in FIG. 1b, that the 3D modeling is applied to a game scenario is described.

For example, the 3D modeling usually needs to be used for a realistic game. For example, the 3D modeling is used to construct a 3D model of an object (including a person and/or an object) in a game scenario, so that a game image is more vivid, and a user has better immersive experience. For example, in a family life simulation game, the 3D modeling is used to construct a 3D model of a person (for example, a family member), a 3D model of a desk, a 3D model of a chair, a 3D model of a wardrobe, a 3D model of a bed, and the like, and the 3D models are displayed in the game image, as shown in FIG. 1b. It should be noted that, in FIG. 1b, a bar chart indicates the 3D model, which is merely an example of the scenario, and does not indicate a 3D model shown in a real game image.

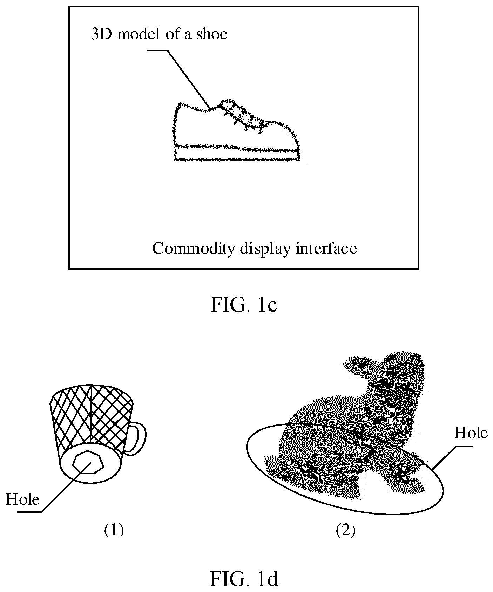

FIG. 1c is a diagram of an example of an application scenario. In the embodiment in FIG. 1c, that the 3D modeling is applied to a commodity display scenario is described.

For example, many shopping applications/websites usually use the 3D modeling to construct 3D models of various commodities, so that a user can view the commodities from different angles of view. For example, the 3D modeling is used to construct a 3D model of a shoe, a 3D model of clothes, a 3D model of furniture, and the like, and then the 3D model of the shoe, the 3D model of the clothes, the 3D model of the furniture, and the like are displayed on a commodity display interface. As shown in FIG. 1c, the 3D model of the shoe is displayed on the commodity display interface. It should be noted that, in FIG. 1c, a bar chart indicates the 3D model, which is merely an example of the scenario, and does not indicate a 3D model shown on a real commodity display interface.

FIG. 1d is a diagram of an example of 3D models.

FIG. 1d (1) is an example of a 3D model of a cup. An image sequence photographed around the cup does not cover the bottom of the cup. As a result, there is a hole (as shown by a polygon at the bottom of the cup in FIG. 1d (1)) at the bottom of the 3D model of the cup.

FIG. 1d (2) is an example of a 3D model of a rabbit doll. An image sequence photographed around the rabbit doll does not cover the bottom of the rabbit doll. As a result, there is a hole (as shown by an elliptical box in FIG. 1d (2), where the back of the rabbit doll is viewed through the hole) at the bottom of the 3D model of the rabbit doll.

To resolve a problem that a 3D model is incomplete (that is, there is a hole), this application provides a 3D model generation method, to generate a 3D model without the hole by performing supplementary photographing on a region of an object that is not covered by a photographed image sequence, and then filling a hole of a 3D model based on a picture sequence obtained through the supplementary photographing.

Correspondingly, this application further proposes a 3D model generation system, configured to implement the foregoing 3D model generation method.

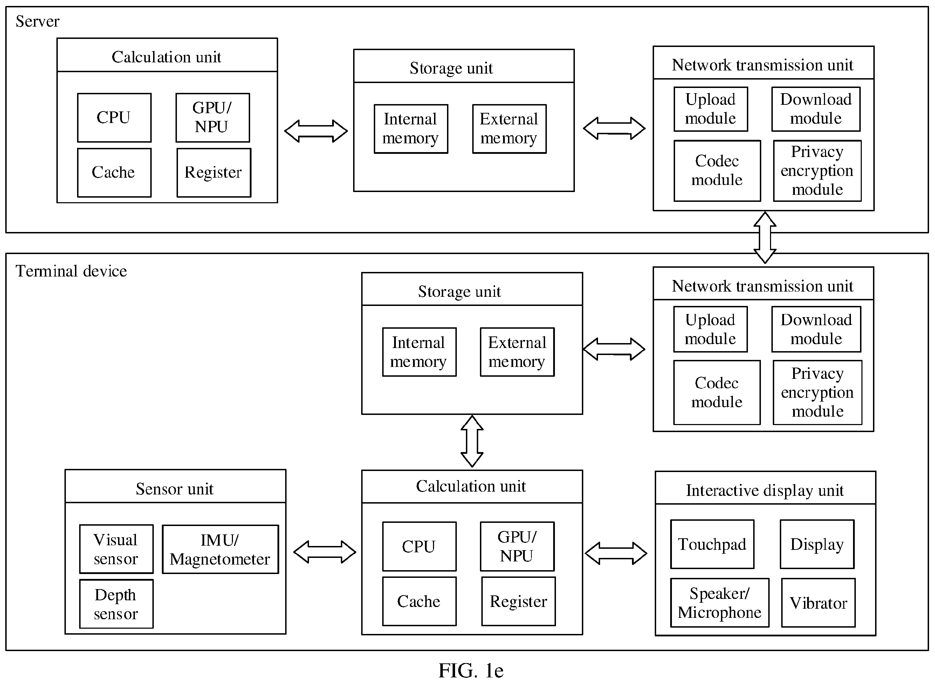

FIG. 1e is a diagram of an example of a hardware structure of a 3D model generation system.

Refer to FIG. 1e. For example, the 3D model generation system may include a server and a terminal device.

For example, the server in FIG. 1e may be a single server, or may be a server cluster (for example, a cloud server) including a plurality of servers. This is not limited in this application.

For example, the terminal device in FIG. 1e may include a plurality of types of terminal devices, for example, a personal computer, a computer workstation, a smartphone, a tablet computer, an intelligent camera, a smart automobile, another type of cellular phone, a media consumption device, a wearable device, a set-top box, and a game console.

Refer to FIG. 1e. For example, the terminal device includes a sensor unit, a calculation unit, a storage unit, an interactive display unit, and a network transmission unit.

For example, the sensor unit may include a visual sensor (for example, a camera), configured to obtain 2D image information; an IMU (Inertial Measurement Unit, inertial sensor), configured to obtain motion information of the terminal device, such as linear acceleration and an angular velocity; a magnetometer, configured to obtain a yaw angle of the terminal device; and a depth sensor (for example, a Lidar (radar)), configured to obtain depth information of a scene. It should be understood that the sensor unit may further include another sensor, for example, a GPS (Global Positioning System, global positioning system), configured to obtain longitude and latitude geographical position information of the terminal device, a laser sensor, a gyroscope, or the like. This is not limited in this application.

For example, the calculation unit may include a CPU (Central Processing Unit, central processing unit), a GPU (Graphics Processing Unit, graphics processing unit), an NPU (Neural-Network Processing Units, network processor), a cache, a register, and the like, and is mainly configured to: run an operating system of the terminal device and perform a texture mapping generation method, a rendering operation, and the like.

For example, the storage unit may include an internal memory and an external memory, and may be configured to: read and write algorithm data and local and temporary data of a user, and the like.

For example, the interaction unit mainly includes a display, a touchpad, a speaker, a microphone, and the like, and may be configured to: interact with a user, obtain a user input, display interaction information, and the like.

For example, the network transmission unit may include an upload module, a download module, a codec module, a privacy encryption module, and the like. The upload module may be configured to upload interaction data to another electronic device (for example, a server), and the download module is configured to download interaction data from another electronic device (for example, a server). The codec module is configured to: encode a part of to-be-uploaded interaction data, and decode a part of downloaded interaction data. The privacy encryption module may be configured to: encrypt a part of to-be-uploaded interaction data, and decrypt a part of downloaded interaction data.

Refer to FIG. 1e. For example, the server includes a calculation unit, a storage unit, and a network transmission unit. Structures of the calculation unit, the storage unit, and the network transmission unit included in the server are similar to structures of the calculation unit, the storage unit, and the network transmission unit included in the terminal device. Details are not described herein again.

It should be understood that FIG. 1e is merely an example. The server and the terminal device in this application may include more or fewer units than those shown in FIG. 1e. This is not limited in this application. In addition, the units in the server and the terminal device in this application may include more or fewer modules/components than those shown in FIG. 1e. This is not limited in this application.

It should be noted that the 3D model generation method in this application may be independently performed by the terminal device, may be independently performed by the server, or may be collaboratively performed by the server and the terminal device. This is not limited in this application. The following describes a 3D model generation process.

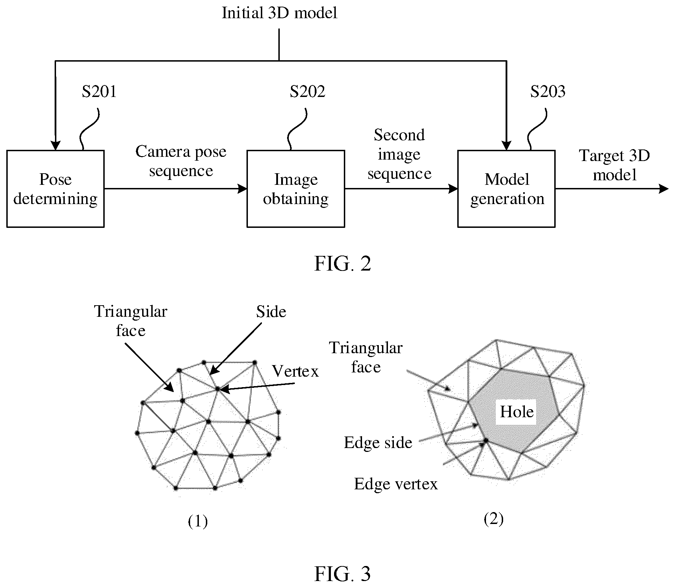

FIG. 2 is a diagram of an example of a 3D model generation process. In the embodiment in FIG. 2, S201 to S203 are independently performed by a terminal device or a server.

S201: When it is determined that there is a hole in an initial 3D model of a target object, determine, based on the hole of the initial 3D model, a camera pose sequence for photographing the target object, where the initial 3D model is obtained by performing 3D modeling based on a first image sequence, and the first image sequence is obtained by photographing around the target object.

For example, when the 3D model of the target object needs to be constructed, photographing may be performed around the target object, to obtain the first image sequence. The first image sequence may include a plurality of first images, and the plurality of first images correspond to different photographing angles of view. Then, the 3D modeling may be performed based on the first image sequence, to obtain the 3D model of the target object (referred to as the initial 3D model below for ease of description, and a specific 3D modeling process is described subsequently).

For example, the target object may be all entities such as an object, an animal, and a person. This is not limited in this application. The entities usually refer to things that exist objectively and can be distinguished from each other.

For example, after the initial 3D model is obtained, the initial 3D model may be detected to determine whether there is the hole in the initial 3D model (a specific process of detecting whether there is the hole in the initial 3D model is described subsequently). The initial 3D model is a grid model, and may include a plurality of vertices, a plurality of triangular faces, and a plurality of texture maps. The triangular face is formed by connecting three vertices end to end, one triangular face may be considered as one grid, and one triangular face corresponds to one texture map. The hole is a region that has no grid and no texture map on the 3D model.

For example, when it is determined that there is the hole in the initial 3D model, the hole in the initial 3D model may be analyzed to determine the camera pose sequence for photographing the target object, namely, a camera pose sequence for performing supplementary photographing on a region that is on a surface of the target object and that corresponds to the hole in the initial 3D model is determined. In this way, an image sequence subsequently obtained by performing the supplementary photographing on the target object based on the camera pose sequence can cover the region that is on the surface of the target object and that corresponds to the hole of the initial 3D model.

The camera pose sequence may include one or more camera poses, and each camera pose may include a camera orientation and a photographing distance.

It should be noted that a camera in this application may be a terminal device including a camera, for example, a mobile terminal (for example, a mobile phone or a tablet computer), a camera, or a camera itself. This is not limited in this application. The camera may be an RGB (Red (red), Green (green), Blue (blue)) camera, or may be a depth camera. This is not limited in this application.

S202: Obtain a second image sequence, where the second image sequence is an image sequence obtained by performing photographing on the target object based on the camera pose sequence.

For example, after the camera pose sequence for performing the supplementary photographing on the target object is determined, a user may be guided to perform, based on the camera pose sequence, the supplementary photographing on the target object by using the camera, to obtain the second image sequence. The second image sequence may include one or more second images. When the second image sequence includes a plurality of second images, photographing angles of view corresponding to the plurality of second images are different. A specific process of guiding the user to perform, based on the camera pose sequence, the supplementary photographing on the target object is described subsequently.

S203: Fill the hole of the initial 3D model based on the second image sequence, to generate a target 3D model.

For example, after the second image sequence that can cover the region that is on the surface of the target object and that corresponds to the hole of the initial 3D model is obtained through photographing, the hole of the initial 3D model may be filled based on the second image sequence, so that the target 3D model without the hole can be generated. A specific filling process is described subsequently.

It should be noted that S201 to S203 may be performed by the terminal device, or S201 to S203 may be performed by the server. This is not limited in this application. For example, after obtaining the target 3D model by performing S201 to S203, the terminal device may display the target 3D model. For example, when the server performs S201 to S203, the terminal device may guide, based on the second image sequence, the user to perform a photographing operation. Correspondingly, the terminal device performs the supplementary photographing on the target object based on the photographing operation of the user, to obtain the second image sequence, and then sends the second image sequence to the server. In this way, the server may obtain the second image sequence. After obtaining the target 3D model, the server may send the target 3D model to the terminal device, and the terminal device displays the target 3D model.

Because the camera pose sequence for performing the supplementary photographing on the target object is determined based on the hole of the initial 3D model, it can be ensured that the second image sequence obtained through the supplementary photographing can cover the region that is on the surface of the target object and that corresponds to the hole of the initial 3D model, and further, the hole of the initial 3D model is filled based on the second image sequence obtained through the supplementary photographing, so that the target 3D model without the hole can be generated. Compared with the conventional technology, in this application, only the image sequence that can cover the region that is on the surface of the target object and that corresponds to the hole of the initial 3D model needs to be photographed. Fewer images need to be photographed, thereby shortening photographing time. Compared with remodeling in the conventional technology, in this application, fewer images are required for filling the hole of the initial 3D model. Therefore, a calculation amount for generating the target 3D model is smaller, and efficiency of generating the target 3D model without the hole is higher.

For example, the process of performing the 3D modeling based on the first image sequence obtained by performing photographing around the target object, to obtain the initial 3D model may be as the following S11 to S17.

S11: Segment the first images in a first image sequence, to obtain a first mask (mask) image sequence.

For example, the first mask image sequence may include a plurality of first mask images, and one first mask image corresponds to one first image.

The following uses an example in which a first image in the first image sequence is segmented, to obtain a mask image corresponding to the first image for description.

For example, the first image may be segmented by using an edge detection algorithm, an AI (Artificial Intelligence, artificial intelligence) segmentation network (for example, an instance segmentation (instance segmentation) network or an image semantic segmentation network), or the like, to separate a foreground region (the foreground region may include a plurality of foreground regions, and each foreground region corresponds to one object) and a background region of the first image.

For example, when there are a plurality of foreground regions in the first image, a foreground region (referred to as a target foreground region below) corresponding to the target object may be selected from the plurality of foreground regions. For example, a region with a largest area is selected from the plurality of foreground regions as the target foreground region. For another example, a foreground region whose center is closest to a center of the first image is selected from the plurality of foreground regions as the target foreground region. This is not limited in this application.

For example, pixel values of pixels in the target foreground region in the first image may all be set to 1, and pixel values of pixels in a region outside the target foreground region in the first image may all be set to 0, to obtain the first mask image corresponding to the first image.

Further, the plurality of first mask images corresponding to the plurality of first images can be obtained in the foregoing manner.

S12: Filter the plurality of first images based on the plurality of first mask images, to obtain a plurality of third images.

For example, for a first image, a first mask image corresponding to the first image may be used to filter the first image (for example, the mask image may be multiplied by a pixel value of a pixel in a position corresponding to the first image), to obtain a filtered first image (referred to as the third image below). In this way, the plurality of third images may be obtained.

S13: Perform pose estimation based on the plurality of third images, to determine camera poses corresponding to the plurality of third images.

For example, the third image is the filtered first image, and the camera pose corresponding to the third image is a camera pose when the first image is photographed.

For example, feature points in the third images may be separately extracted, and then feature points in any two third images are matched, to determine a feature point pair corresponding to the any two images (two matched feature points in two third images may form one feature point pair). Two third images with a maximum quantity of corresponding feature point pairs are neighborhood frames of each other, and the two third images that are the neighborhood frames of each other may be associated. Then, pose solving may be performed based on the feature point pair of the two third images that are the neighborhood frames of each other, to determine camera poses corresponding to the two third images that are the neighborhood frames of each other respectively. In this way, the camera poses corresponding to the plurality of third images may be determined.

It should be understood that the pose estimation may also be directly performed based on the plurality of first images, to determine the camera poses corresponding to the plurality of first images. For a specific manner, refer to the foregoing description. Details are described herein again.

S14: Perform depth estimation based on the camera poses corresponding to the plurality of third images, to determine depth information of the plurality of third images.

For example, the depth estimation may be performed by using an MVS (multiple view stereo) algorithm (for example, may be a conventional triangulation algorithm or may be implemented via an AI network), to determine the depth information of the plurality of third images. Depth information of a third image is distances between pixels (the pixels included in the target foreground region) in the third image and the camera.

S15: Perform point cloud fusion based on the depth information of the plurality of third images, to obtain a first 3D point cloud.

For example, the depth information of each third image is mapped to three-dimensional space, to obtain a 3D point cloud. Then, the point cloud fusion is performed on the 3D point clouds mapped to the three-dimensional space, to obtain the first 3D point cloud.

For example, after the depth information of each third image is mapped to the three-dimensional space, the 3D point clouds in the three-dimensional space that are mapped from the third images are combined based on an association relationship between the plurality of third images. Because the plurality of third images may cover a same region on the surface of the target object, after the 3D point clouds in the three-dimensional space that are mapped from the third images are combined, deduplication processing may be performed on points included in 3D point clouds corresponding to the same region on the surface of the target object, to obtain the first 3D point cloud.

S16: Grid based on the first 3D point cloud, to obtain a candidate 3D model.

For example, the first 3D point cloud may be gridded in a nearest neighbor manner, to obtain the candidate 3D model.

In a possible manner, a point (referred to as a point A below) may be randomly selected from N points first. Then, another point (referred to as a point B below, that is, a point closest to the point A is selected from N-1 points) is selected from the remaining N-1 points in the nearest neighbor manner. Then, a point (referred to as a point C below) with a minimum sum of a distance to the point A and a distance to the point B is selected from remaining N-2 points, and the point A, the point B, and the point C are sequentially connected to form a triangular face (namely, a grid). For any two of the point A, the point B, and the point C (for example, the point B and the point C), a point (referred to as a point D below) with a minimum sum of a distance to the point B and a distance to the point C is selected from remaining N-3 points, and the point D, the point B, and the point C are sequentially connected to form a triangular face. By analogy, the first 3D point cloud may be gridded, to obtain the candidate 3D model.

After gridding is completed, the candidate 3D model may be obtained. The candidate 3D model includes a plurality of vertices, and the plurality of vertices are points included in the first 3D point cloud (in other words, the plurality of vertices may form the first 3D point cloud). Each grid on a surface of the candidate 3D model is a triangular face, and the triangular face is formed by connecting three vertices (namely, three points in the first 3D point cloud) end to end.

S17: Perform texture mapping on the candidate 3D model, to obtain the initial 3D model.

For example, for a triangular face of the candidate 3D model, the plurality of third images may be searched for a candidate image that includes three vertices of the triangular face. When there are a plurality of candidate images, photographing angles of view corresponding to the candidate images may be determined based on camera poses corresponding to the plurality of candidate images. In addition, triangular regions corresponding to the triangular face in the candidate images, and a texture difference (referred to as a texture difference corresponding to the candidate image below) of a texture map corresponding to an adjacent triangular face of the triangular face may be further determined. Then, a target image may be selected based on the photographing angles of view corresponding to the candidate images and texture differences corresponding to the candidate images. For example, intermediate images whose corresponding texture difference is less than a threshold (the threshold may be set based on a requirement, and is not limited in this application) may be selected from the candidate images, and then an intermediate image whose photographing angle of view is most perpendicular to the triangular face is selected from the intermediate images as the target image. Then, a triangular region corresponding to the triangular face in the target image may be extracted as a texture map of the triangular face. Then, the triangular face is mapped by using the texture map. In this way, after mapping is performed on each triangular face on the candidate 3D model, the initial 3D model may be obtained.

It should be noted that when the camera is an RGB camera, the first image is an RGB image, and the initial 3D model may be constructed with reference to S11 to S17. When the camera is a depth camera, in addition to the first image (the RGB image), the image photographed around the target object further includes a depth image (including depth information of each pixel in the RGB image). In this case, after S11 to S13 are performed, the depth estimation in S14 may not need to be performed, but S15 to S17 may be directly performed to construct the initial 3D model.

For example, the process of detecting whether there is the hole in the initial 3D model may be as follows:

FIG. 3 is a diagram of an example of grid structures of 3D models.

FIG. 3 (1) is a diagram of a grid structure of a complete (without a hole) 3D model. Because there is no hole in the complete 3D model, that is, the 3D model does not have a region without a grid, each side of the complete 3D model may be shared by two triangular faces.

FIG. 3 (2) is a diagram of a grid structure of a 3D model with a hole. Because the hole of the 3D model does not have a grid, each of some sides of the 3D model is used by only one triangular face. The side used by only one triangular face may be referred to as an edge side, and vertices at two ends of the edge side may be referred to as edge vertices (namely, vertices at edges of the hole). In other words, the hole of the 3D model is formed by connecting a series of edge sides end to end.

Based on this, in a possible manner, whether the initial 3D model has the edge side may be detected based on a definition of the edge side, to detect whether there is the hole in the initial 3D model. When it is detected that the initial 3D model has the edge side (that is, there is the side used by only one triangular face), it may be determined that there is the hole in the initial 3D model. When it is detected that the initial 3D model does not have the edge side, it may be determined that there is no hole in the initial 3D model.

Refer to FIG. 3 (1) again. For example, in the complete 3D model, for any vertex, a quantity of sides (namely, sides connected to the vertex) corresponding to the vertex is equal to a quantity of triangular faces (namely, triangular faces sharing the vertex) corresponding to the vertex. For example, in FIG. 3 (1), a quantity of sides corresponding to a vertex identified by an arrow is 6, and a quantity of triangular faces corresponding to the vertex identified by the arrow is 6.

Refer to FIG. 3 (2) again. In the 3D model with the hole, for any vertex other than the edge vertex, a quantity of sides corresponding to the vertex is equal to a quantity of triangular faces corresponding to the vertex. For any edge vertex, a quantity of sides (namely, sides connected to the edge vertex) corresponding to the edge vertex is not equal to a quantity of triangular faces (namely, triangular faces sharing the edge vertex) corresponding to the edge vertex. For example, in FIG. 3 (2), a quantity of sides corresponding to an edge vertex identified by an arrow is 5, and a quantity of triangular faces corresponding to the edge vertex identified by the arrow is 4.

Based on this, in a possible manner, whether there is the hole in the initial 3D model may be detected by detecting whether the initial 3D model includes a vertex (namely, the edge vertex) whose quantity of corresponding sides is not equal to a quantity of corresponding triangular faces. For example, when it is detected that the initial 3D model includes the vertex whose quantity of corresponding sides is not equal to the quantity of the corresponding triangular faces, that is, when it is determined that the initial 3D model includes the edge vertex, it may be determined that there is the hole in the initial 3D model. When it is detected that the initial 3D model does not have the vertex whose quantity of corresponding sides is not equal to the quantity of the corresponding triangular faces, that is, when it is determined that the initial 3D model does not include the edge vertex, it may be determined that there is no hole in the initial 3D model.

The following describes a specific process of generating the 3D model.

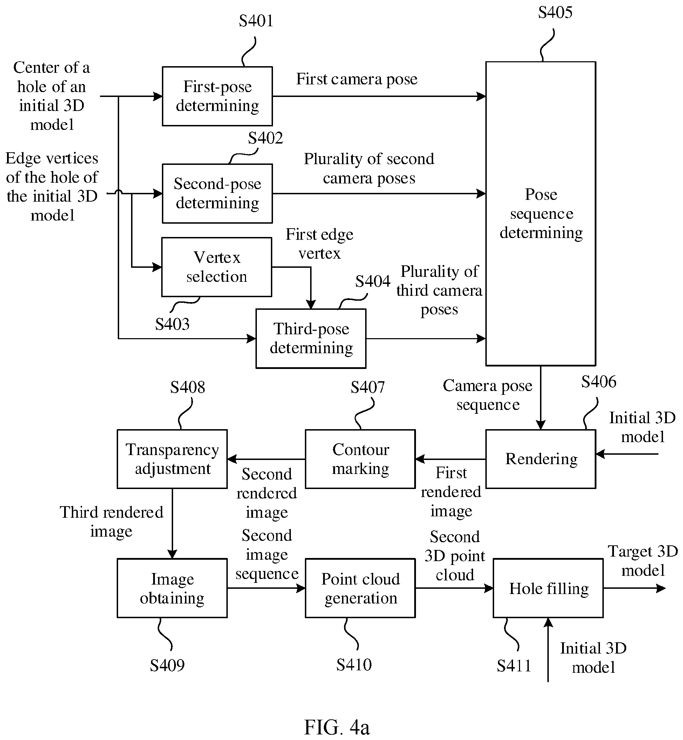

FIG. 4a is a diagram of an example of a 3D model generation process. In the embodiment in FIG. 4a, S401 to S411 are independently performed by a terminal device or a server.

For determining the camera pose sequence for photographing the target object based on the hole of the initial 3D model in S201, refer to the following descriptions of S401 to S405.

S401: When it is determined that there is a hole in an initial 3D model of a target object, determine a first camera pose based on a center of the hole.

For example, the center of the hole may be determined based on a plurality of edge vertices located at edges of the hole. For example, vertex coordinates of the plurality of edge vertices may be obtained, then an average value of the vertex coordinates of the plurality of edge vertices is calculated, and coordinates of the center of the hole are determined based on the average value of the vertex coordinates of the plurality of edge vertices. Then, the first camera pose may be determined based on the center of the hole and a center of the initial 3D model (the center of the initial 3D model may also be considered as a center of the target object).

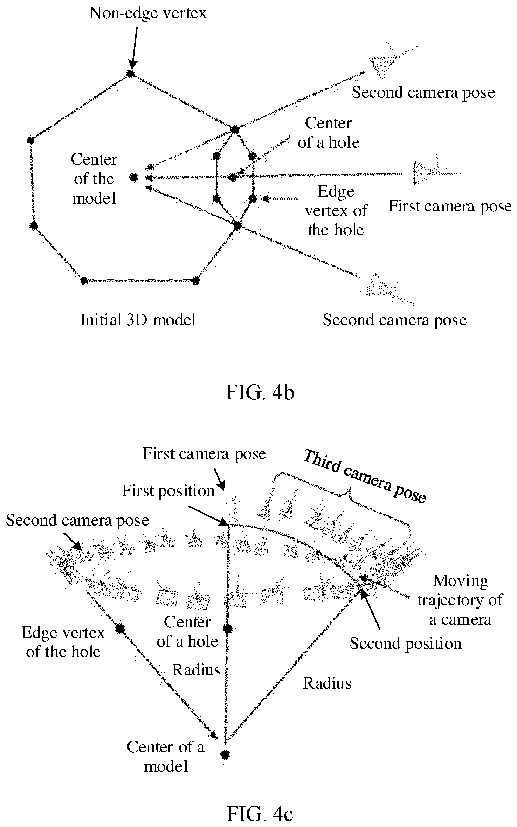

FIG. 4b is a diagram of an example of a camera pose determining process. In FIG. 4b, a non-edge vertex is a vertex other than the edge vertex in vertices included in the initial 3D model.

Refer to FIG. 4b. For example, a direction from the center of the hole to the center of the initial 3D model may be used as a first camera orientation. In a possible manner, a photographing distance corresponding to a first image sequence (namely, a photographing distance corresponding to each first image in the first image sequence (namely, a distance between a camera and the target object when the first image is photographed)) is obtained, and then an average value of photographing distances corresponding to some or all first images in the first image sequence is used as a first photographing distance. In a possible manner, a photographing distance corresponding to any first image in the first image sequence is obtained as the first photographing distance. It should be understood that how to determine the first photographing distance based on the photographing distance corresponding to the first image sequence is not limited in this application. Then, the first camera pose may be generated based on the first camera orientation and the first photographing distance.

S402: Determine a plurality of second camera poses based on the plurality of edge vertices, where one edge vertex correspondingly determines one second camera pose.

For example, the plurality of second camera poses may be determined based on the plurality of edge vertices and the center of the initial 3D model.

For example, a second edge vertex may be first selected from the plurality of edge vertices, then a direction from the second edge vertex to the center of the initial 3D model may be used as a second camera orientation, and a second photographing distance is determined based on the photographing distance corresponding to the first image sequence (for details, refer to the foregoing description, and details are not described herein again). Then, a second camera pose may be generated based on the second camera orientation and the second photographing distance.

For example, the second edge vertex may be selected from the plurality of edge vertices based on a first preset interval, where the first preset interval may be a quantity of edge vertices, for example, N (N is an integer) edge vertices. When N is 0, all edge vertices may be determined as the second edge vertices, and corresponding second camera poses may be generated for all the edge vertices. When N is greater than 0, some edge vertices are determined as the second edge vertices, and corresponding second camera poses are generated only for the some edge vertices. A value of N may be set based on a requirement. This is not limited in this application.

It should be understood that FIG. 4b is merely an example. In an actual case, the quantity of the edge vertices may be greater or less than that shown in FIG. 4b.

It should be understood that FIG. 4b is merely an example, and only shows that two second camera poses are determined based on two edge vertices. In an actual process, more second camera poses may be determined based on more edge vertices than those shown in FIG. 4b.

S403: Select a first edge vertex from the plurality of edge vertices.

S404: Determine a plurality of third camera poses based on the first camera pose and a second camera pose corresponding to the first edge vertex, where the third camera pose is a pose in which the camera moves between a first position and a second position to perform photographing, the first position is a camera position determined based on the first camera pose, and the second position is a camera position determined based on the second camera pose corresponding to the first edge vertex.

S405: Determine a camera pose sequence based on the first camera pose, the plurality of second camera poses, and the plurality of third camera poses.

For example, to ensure smoothness of an entire supplementary photographing process, namely, smoothness of the camera moving from the first position corresponding to the first camera pose (the first position may be determined based on the first camera pose and the center of the initial 3D model) to a second position corresponding to any second camera pose (the second position may be determined based on the second camera pose and the center of the initial 3D model) or moving from any second position to the first position to perform supplementary photographing, the pose (referred to as the third camera pose below) in which the camera moves between the first position and the second position to perform the supplementary photographing may be determined.

For example, one or more first edge vertices may be selected from the plurality of edge vertices. When there are a plurality of selected first edge vertices, for a first edge vertex, the plurality of third camera poses may be determined based on the first camera pose and a second camera pose corresponding to the first edge vertex.

FIG. 4c is a diagram of an example of a camera pose determining process. It should be noted that the second camera pose in FIG. 4c is not one second camera pose pointed by an arrow, but includes a plurality of camera poses surrounding a circle (or an ellipse or a polygon).

Refer to FIG. 4c. For example, the center of the initial 3D model may be used as a circle center, a distance between the first position and the center of the initial 3D model is used as a radius, and a distance between the second position and the center of the initial 3D model is used as a radius, to determine a sector arc. The sector arc is used as a moving trajectory of the camera between the first position and the second position.

For example, a plurality of trajectory points may be selected from the sector arc at a second preset interval. The second preset interval may be an angle, and may be specifically set based on a requirement, for example, 5°. This is not limited in this application. For a trajectory point, a direction from the trajectory point to the center of the initial 3D model may be determined as a third camera orientation, a first camera distance or a second camera distance is used as a third camera distance, and then the third camera pose is generated based on the third camera orientation and the third camera distance. In this way, one third camera pose may be generated for one trajectory point, and a plurality of third camera poses may be generated for the plurality of trajectory points on the moving trajectory. Further, the plurality of the third camera poses between the first position and one second position may be generated.

It should be understood that FIG. 4c only shows the plurality of the third camera poses between the first position and the second position. In this application, the plurality of first edge vertices may be selected from the edge vertices, and then a plurality of third camera poses between the first position and second positions are generated.

Then, the camera pose sequence may be generated based on the first camera pose, the plurality of second camera poses, and the plurality of third camera poses.

In a possible manner, the camera pose sequence may be generated in a sequence of the first camera pose, the plurality of third camera poses, and the plurality of second camera poses. In a possible manner, the camera pose sequence may be generated in a sequence of the plurality of second camera poses, the plurality of third camera poses, and the first camera pose. It should be understood that the camera pose sequence may alternatively be generated in another sequence. A sequence of the first camera pose, the second camera pose, and the third camera pose is not limited in this application, provided that the first camera pose, the second camera pose, and the third camera pose are sorted, to ensure that the camera can smoothly perform supplementary photographing.

It should be noted that, in a possible manner, when there are one or more small holes (the small hole is a hole whose quantity of edge vertices is less than a quantity threshold, and the quantity threshold may be specifically set based on a requirement, which is not limited in this application) in the initial 3D model, S402 to S404 may not be performed, that is, the second camera pose and the third camera pose are not determined, and S405 is replaced with: Determine the camera pose sequence based on the first camera pose. In other words, S402 to S404 are optional steps. When there is one small hole in the initial 3D model, a subsequently photographed second image sequence includes only one second image. When there are a plurality of small holes in the initial 3D model, the subsequently photographed second image sequence includes a plurality of second images.

In a possible manner, when there is one large hole (the large hole is a hole whose quantity of edge vertices is greater than or equal to a quantity threshold) in the initial 3D model, S402 may be performed, but S403 and S404 are not performed, that is, the third camera pose is not determined, and S405 is replaced with: Determine the camera pose sequence based on the first camera pose and the plurality of second camera poses. This is not limited in this application. In this way, the second image sequence that subsequently performs the supplementary photographing on the target object includes fewer second images, so that supplementary photographing time can be reduced. In addition, calculation time required for subsequently filling the hole of the initial 3D model based on the second image sequence is also reduced, so that efficiency of generating a target 3D model can be improved. Certainly, if S403 to S405 are performed, more second images may be supplementarily photographed, and the hole of the initial 3D model is filled based on the second image sequence including the more second images, so that details of a region that is in the target 3D model and that corresponds to the hole of the initial 3D model are more authentic. It should be understood that determining the third camera pose in S403 and S404 is an optional step.

It should be noted that, when there are a plurality of holes in the initial 3D model, and the plurality of holes include a large hole and a small hole, if an included angle of view of any two holes in the plurality of holes (an included angle between a line segment 1 obtained by connecting a center of one hole and the center of the initial 3D model and a line segment 2 obtained by connecting a center of the other hole and the center of the initial 3D model) is less than an angle of view threshold (which may be specifically set based on a requirement, and is not limited in this application), a minimum circumcircle including all holes may be determined, then a photographing center is determined based on centers of the plurality of holes, and then a first camera pose is determined based on the photographing center. A plurality of points are selected from the minimum circumcircle, and a plurality of second camera poses are determined based on the plurality of points of the minimum circumcircle, where one point of the minimum circumcircle correspondingly determines one second camera pose. Then, the camera pose sequence is determined based on the first camera pose and the plurality of second camera poses.

When there are a plurality of holes in the initial 3D model, and the plurality of holes include a large hole and a small hole, if there are two holes whose included angle of view is greater than an angle of view threshold in the plurality of holes, based on an included angle of view of every two holes in the plurality of holes, a plurality of regions are divided. One region may include one or more holes (when one region includes a plurality of holes, an included angle of view of any two holes in the plurality of holes included in the region is less than the included angle threshold). Then, for each region, a minimum circumcircle including all holes in the region may be determined, then a photographing center is determined based on centers of the plurality of holes included in the region, and then a first camera pose is determined based on the photographing center. A plurality of points are selected from the minimum circumcircle, and a plurality of second camera poses are determined based on the plurality of points of the minimum circumcircle, where one point of the minimum circumcircle correspondingly determines one second camera pose. Then, the camera pose sequence is determined based on the first camera pose and the plurality of second camera poses.

S406: Perform rendering based on the camera pose sequence and the initial 3D model, to obtain a plurality of first rendered images, where one first rendered image corresponds to one photographing angle of view, and one photographing angle of view corresponds to one camera pose in the camera pose sequence.

For example, for a camera pose in the camera pose sequence, the initial 3D model may be rendered based on the camera pose, a preset material, lighting, and a rendering parameter, to obtain a first rendered image. In this way, a photographing angle of view corresponding to the obtained rendered image is an angle of view at which the camera photographs the target object in the camera pose. In this way, the plurality of first rendered images with different photographing angles of view may be obtained through rendering based on a plurality of poses in the camera pose sequence. One first rendered image corresponds to one photographing angle of view, and one photographing angle of view corresponds to one camera pose in the camera pose sequence.

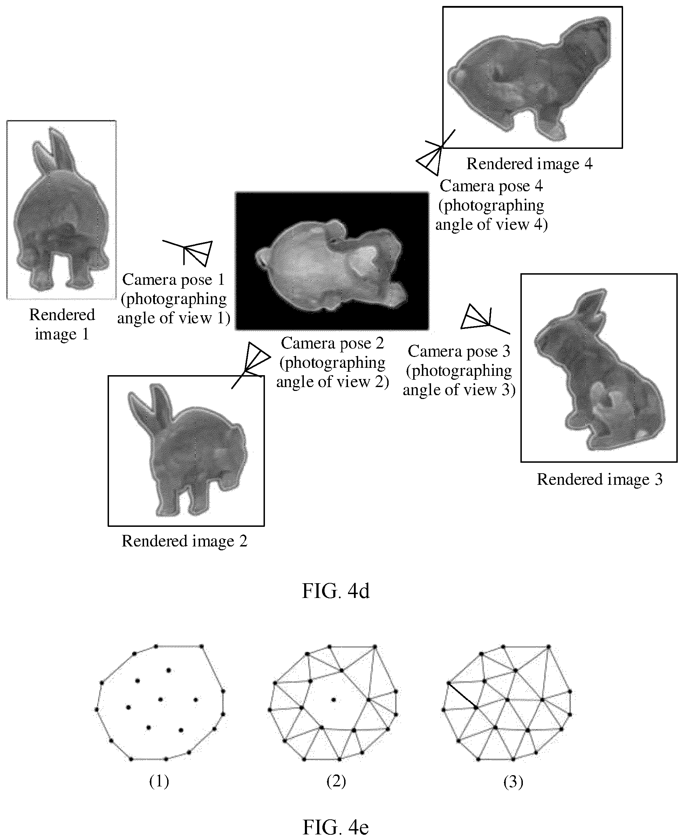

FIG. 4d is a diagram of an example of first rendered images at different photographing angles of view.

In the embodiment in FIG. 4d, four rendered images are shown as an example: a rendered image 1, a rendered image 2, a rendered image 3, and a rendered image 4. The rendered image 1 corresponds to a photographing angle of view 1, and the photographing angle of view 1 is an angle of view at which the camera photographs the target object in a camera pose 1. The rendered image 2 corresponds to a photographing angle of view 2, and the photographing angle of view 2 is an angle of view at which the camera photographs the target object in a camera pose 2. The rendered image 3 corresponds to a photographing angle of view 3, and the photographing angle of view 3 is an angle of view at which the camera photographs the target object in a camera pose 3. The rendered image 4 corresponds to a photographing angle of view 4, and the photographing angle of view 4 is an angle of view at which the camera photographs the target object in a camera pose 4.

S407: Mark contours of the target object in the plurality of first rendered images, to obtain a plurality of second rendered images, where the second rendered image includes a contour marking line.

For example, for each first rendered image, the first rendered image may be segmented, to determine a foreground region (a region corresponding to the target object) and a background region of the first rendered image, and then the contour (namely, an edge of the foreground region) of the target object in the first rendered image may be marked, to obtain the second rendered image. In this way, the plurality of second rendered images may be obtained, and each second rendered image includes the contour marking line, as shown by a gray contour line in FIG. 4d.

S408: Adjust transparency of regions framed by the contour marking lines in the plurality of second rendered images to a preset value, to obtain a plurality of third rendered images, where the preset value is between minimum transparency and maximum transparency.

S409: Obtain the second image sequence, where the second image sequence is an image sequence obtained by performing photographing on the target object based on the plurality of third rendered images.

For example, to facilitate guiding of a user to perform the supplementary photographing, for each second rendered image, transparency of the region framed by the contour marking line in the second rendered image is adjusted to the preset value.

In a possible manner, the preset value is between the minimum transparency and the maximum transparency.

In a possible manner, the preset value may be the maximum transparency.

The second rendered image whose transparency is adjusted may be referred to as a third image.

The third rendered image includes the contour marking line, and the region framed by the contour marking line has specific transparency (surface information of the target object can be retained to some extent). Therefore, subsequently, based on the third rendered image, the user can be effectively guided to perform the supplementary photographing based on the camera pose in the foregoing determined camera pose sequence (for example, the third rendered image is displayed on a photographing interface), so that the second image sequence obtained by performing the supplementary photographing on the target object can cover the region that is on the target object and that corresponds to the hole of the initial 3D model.

For example, for each third rendered image, transparency of a region outside the region framed by the contour marking line in the third rendered image may be further adjusted to the maximum transparency. In this way, after the third rendered image is displayed on the photographing interface, the region outside the region framed by the contour marking line in the third rendered image can display an image captured by the camera of the terminal device, which may provide a reference for the user, and can help the user quickly and effectively adjust the pose of the camera of the terminal device.

Further, after the user subsequently performs a photographing operation based on the third rendered image, a plurality of second image sequences can be obtained. A specific process in which the terminal device interacts with the user to perform the supplementary photographing is described subsequently.

For filling the hole of the initial 3D model based on the second image sequence, to obtain the target 3D model in S203, refer to the following descriptions of S410 and S411.

S410: Determine a second 3D point cloud based on the second image sequence.

For example, for a process of determining the second 3D point cloud based on the second image sequence, refer to the following S21 to S25.

S21: Segment the second images in the second image sequence, to obtain a second mask (mask) image sequence.

For example, the second mask image sequence may include a plurality of second mask images, and one second mask image corresponds to one second image.

S22: Filter the plurality of first images based on the plurality of first mask images, to obtain a plurality of fourth images.

S23: Perform depth estimation based on camera poses corresponding to the plurality of fourth images, to determine depth information of the plurality of fourth images.

S24: Map the depth information of the fourth image to three-dimensional space, to obtain the second 3D point cloud.

For example, for S21 to S24, refer to the foregoing description of S11 to S13 and S15. Details are not described herein again.

For example, mapping the depth information of the plurality of fourth images to the three-dimensional space may refer to mapping the depth information of the plurality of fourth images to three-dimensional space in which the initial 3D model is located.

It should be noted that camera poses corresponding to the plurality of fourth images are camera poses corresponding to the plurality of second images. Because the camera pose of the second image is determined in S405, there is no need to perform a step of performing pose estimation based on the plurality of fourth images, to determine the camera poses corresponding to the plurality of fourth images. However, before S23 is performed, a neighborhood frame of each fourth image needs to be determined. In a process of determining the neighborhood frame of each fourth image, the neighborhood frame of each fourth image may be determined from the first image (or a plurality of third images) included in the first image sequence and the plurality of fourth images, and two fourth images that are neighborhood frames of each other are associated. For details, refer to the foregoing description. Details are not described herein again. In other words, the neighborhood frame of each fourth image may be another fourth image or a first image (or a third image).

S411: Fill the hole of the initial 3D model based on the second 3D point cloud, to generate the 3D model.

For example, S411 may include the following steps S31 to S33.

S31: Perform point cloud fusion on the second 3D point cloud and the first 3D point cloud, to obtain an intermediate 3D model, where the intermediate 3D model includes a third 3D point cloud, the third 3D point cloud is located in a hole of the intermediate 3D model, and the third 3D point cloud is a subset of the second 3D point cloud.

For example, based on the foregoing description, it can be learned that the initial 3D model includes the first 3D point cloud (a vertex of the initial 3D model is a point in the first 3D point cloud), and the point cloud fusion may be performed on the second 3D point cloud and the first 3D point cloud, to obtain the intermediate 3D model.

For example, after the depth information of each fourth image is mapped to the three-dimensional space of the initial 3D model, the second 3D point cloud and the first 3D point cloud may be combined based on an association relationship between the plurality of fourth images.

For example, the first image in the first image sequence and the second image in the second image sequence may cover a same region on the surface of the target object, and the plurality of second images in the second image sequence may also cover a same region on the surface of the target object. Therefore, after the second 2D point cloud and the first 3D point cloud are combined, deduplication processing may be performed on points in the second 3D point cloud that correspond to a same region on the surface of the target object, and the deduplication processing may be performed on points in the second 3D point cloud and the first 3D point cloud that correspond to a same region on the surface of the target object. In this way, after the point cloud fusion is completed, the hole of the initial 3D model is filled by some second 3D point clouds (referred to as the third 3D point cloud below, and the third 3D point cloud is the subset of the second 3D point cloud), to obtain the intermediate 3D model. In other words, the intermediate 3D model includes some or all of first 3D point clouds and the third 3D point cloud, and the third 3D point cloud is located in the hole of the intermediate 3D model.

S32: Grid the plurality of edge vertices and a plurality of points included in the third 3D point cloud.

For example, after the intermediate 3D model is obtained, the hole of the intermediate 3D model may be gridded. The edge vertices in the intermediate 3D model and the plurality of points included in the third 3D point cloud may be gridded. In a possible manner, the plurality of edge vertices and the plurality of points included in the third 3D point cloud may be gridded based on distances between the edge vertices and the second 3D point clouds included in the third 3D point cloud.

For example, it is assumed that a quantity of edge vertices is M1, and a quantity of points included in the third 3D point cloud is M2. The M2 points included in the third 3D point cloud may be searched for a point (referred to as a point A below for ease of description) closest to each edge vertex, and M3 points A (M3 is less than or equal to M2) may be determined. Then, the M3 points A may be sequentially connected end to end to form a polygon (referred to as a polygon 1 below), and each edge vertex is connected to the point A closest to the edge vertex. If a polygon (referred to as a polygon 2 below, excluding a triangle) still exists between an edge of the hole and the polygon 1, for the polygon 2, the polygon 2 is divided into a plurality of triangles by connecting edge vertices of the polygon 2 to the points A. In this way, after the operation is performed for a plurality of polygons 2, the polygon 2 between the edge of the hole and the polygon 1 can be eliminated, and further, only the triangle exists between the edge of the hole and the polygon 1. Subsequently, a remaining point (referred to as a point B below for ease of description, and a quantity is M2-M3) included in the third 3D point cloud is searched for a point (referred to as a point C below for ease of description, and a quantity is M4) separately closest to each of the M3 points A. The M4 points C are connected to the M3 points A in the foregoing manner. By analogy, the hole of the intermediate 3D model is continuously reduced until the hole of the intermediate 3D model is closed.

FIG. 4e is a diagram of an example of a gridding process.

FIG. 4e (1) shows the intermediate 3D model. The hole of the intermediate 3D model is filled by the third 3D point cloud, the third 3D point cloud includes seven (that is, M2=7) points, and there are 12 (that is, M1=12) edge vertices at an edge of the hole.

Refer to FIG. 4e (2). The intermediate 3D model is gridded for the first time. The seven points may be searched for a point (the point A) closest to each edge vertex, and six (that is, M3=6) points A may be determined. Then, the 12 edge vertices may be connected to points A closest to the 12 edge vertices, and the six points A are connected end to end, to form the polygon 1. If the polygon (referred to as the polygon 2 below, excluding the triangle) still exists between the edge of the hole and the polygon 1, for the polygon 2, the polygon 2 is divided into the triangle by connecting the edge vertex of the polygon 2 to the point A. In this way, after the operation is performed for the plurality of polygons 2, the polygon 2 between the edge of the hole and the polygon 1 can be eliminated, and further, only the triangle exists between the edge of the hole and the polygon 1. In this case, there is one remaining point point B included in the third 3D point cloud. In this case, the six points A may be sequentially connected to the point B, so that the hole of the intermediate 3D model can be closed, as shown in FIG. 4e (3).

S33: Generate the target 3D model based on a gridded intermediate 3D model.

For example, texture mapping may be performed on a triangular face of a gridded region in the gridded intermediate 3D model, to generate the target 3D model. For a specific texture mapping process, refer to the foregoing description of S17. Details are described herein again.

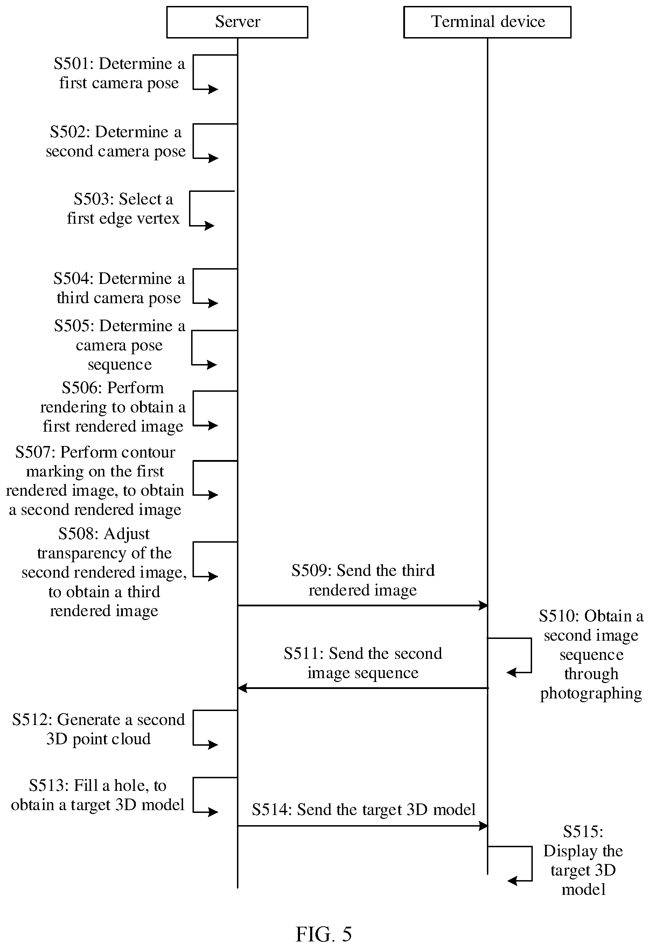

FIG. 5 is a diagram of an example of a 3D model generation process. In the embodiment in FIG. 5, a process in which a server and a terminal device collaboratively generate a target 3D model is described.

For determining the camera pose sequence for photographing the target object based on the hole of the initial 3D model in S201, refer to the following descriptions of S501 to S505.

S501: When determining that there is a hole in an initial 3D model of a target object, the server determines a first camera pose based on a center of the hole.

S502: The server determines a plurality of second camera poses based on a plurality of edge vertices, where one edge vertex correspondingly determines one second camera pose.

S503: The server selects a first edge vertex from the plurality of edge vertices.

S504: The server determines a plurality of third camera poses based on the first camera pose and a second camera pose corresponding to the first edge vertex, where the third camera pose is a pose in which a camera moves between a first position and a second position to perform photographing, the first position is a camera position determined based on the first camera pose, and the second position is a camera position determined based on the second camera pose corresponding to the first edge vertex.

S505: The server determines a camera pose sequence based on the first camera pose, the plurality of second camera poses, and the plurality of third camera poses.

S506: The server performs rendering based on the camera pose sequence and the initial 3D model, to obtain a plurality of first rendered images, where one first rendered image corresponds to one photographing angle of view, and one photographing angle of view corresponds to one camera pose in the camera pose sequence.

S507: The server marks contours of the target object in the plurality of first rendered images, to obtain a plurality of second rendered images, where the second rendered image includes a contour marking line.

S508: The server adjusts transparency of regions framed by the contour marking lines in the plurality of second rendered images to a preset value, to obtain a plurality of third rendered images, where the preset value is between minimum transparency and maximum transparency.

S509: The server sends the plurality of third rendered images to the terminal device.

For obtaining the second image sequence in S202, refer to the following description of S510.

S510: The terminal device sequentially displays the plurality of third rendered images, and photographs a second image sequence based on a plurality of photographing operations performed by a user.

For example, a process in which the terminal device interacts with the user in S510 is described subsequently.

S511: The terminal device sends the second image sequence to the server.

For filling the hole of the initial 3D model based on the second image sequence, to obtain the target 3D model in S203, refer to the following descriptions of S512 and S513.

S512: The server generates a second 3D point cloud based on the second image sequence.

S513: The server fills the hole of the initial 3D model based on the second 3D point cloud, to generate the 3D model.

S514: The server sends the target 3D model to the terminal device.

S515: The terminal device displays the target 3D model.

For example, for S501 to S515, refer to the foregoing description. Details are not described herein again.

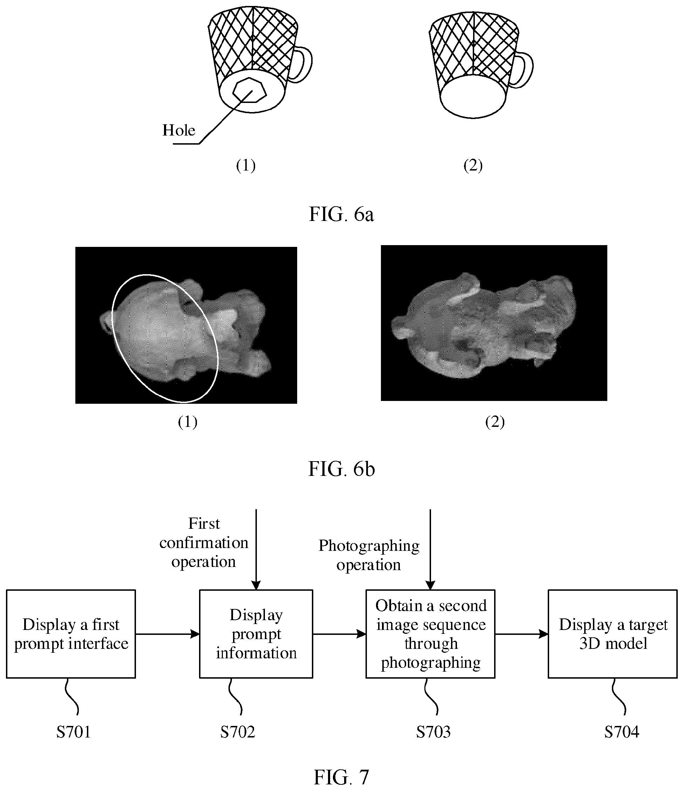

FIG. 6a is a diagram of an example of 3D models.

For example, FIG. 6a (1) is an initial 3D model of a cup, and there is a hole in the initial 3D model of the cup, as shown by a polygon at the bottom of the cup. FIG. 6a (2) shows a target 3D model of the cup generated by filling the initial 3D model of the cup in FIG. 6a (1) by using the 3D model generation method in this application. It can be learned from FIG. 6a (2) that the target 3D model without the hole can be generated by using the 3D model generation method in this application.

FIG. 6b is a diagram of an example of 3D models.

For example, FIG. 6b (1) is an initial 3D model of a rabbit doll, and there is a hole in the initial 3D model of the rabbit doll, as shown by a white elliptical box. FIG. 6b (2) shows a target 3D model of the rabbit doll generated by filling the initial 3D model of the rabbit doll in FIG. 6b (1) by using the 3D model generation method in this application. It can be learned from FIG. 6b (2) that the target 3D model without the hole can be generated by using the 3D model generation method in this application.

The following describes the process in which the terminal device interacts with the user.

FIG. 7 is a diagram of an example of a 3D model generation process.

S701: Display a first prompt interface when there is a hole in an initial 3D model of a target object, where the first prompt interface is used to ask a user whether to perform supplementary photographing on the target object, the initial 3D model is obtained by performing 3D modeling based on a first image sequence, and the first image sequence is obtained by photographing the target object.

In a possible manner, when determining that there is the hole in the initial 3D model of the target object, the terminal device may display the first prompt interface, where the first prompt interface is used to ask the user whether to perform the supplementary photographing on the target object.

In a possible manner, when determining that there is the hole in the initial 3D model of the target object, a server may send a supplementary photographing instruction to the terminal device, where the supplementary photographing instruction is used to trigger the terminal device to display the first prompt interface. After receiving the supplementary photographing instruction, the terminal device may display the first prompt interface, to ask the user whether to perform the supplementary photographing on the target object.

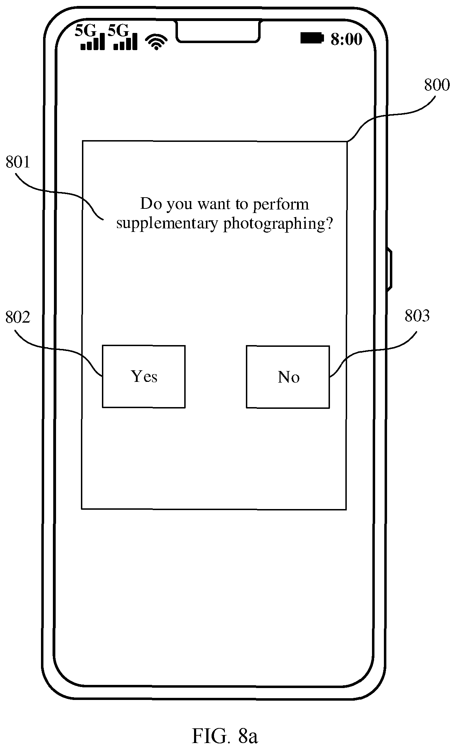

FIG. 8a is a diagram of an example of the first prompt interface.

Refer to FIG. 8a. For example, the first prompt interface 800 may include but is not limited to supplementary photographing query information 801, a first confirmation option 802, a first denial option 803, and the like.

For example, the supplementary photographing query information 801 may be, for example, "Do you want to perform supplementary photographing?". When the user agrees to perform the supplementary photographing on the target object, the user may tap the first confirmation option 802. When the user does not agree to perform the supplementary photographing on the target object, the user may tap the first denial option 803.

S702: Display prompt information in response to a first confirmation operation, where the prompt information is used to guide the user to photograph the target object, the prompt information is generated based on a camera pose sequence for photographing the target object, and the camera pose sequence is determined based on the hole of the initial 3D model.

S703: Photograph a second image sequence for the target object in response to a photographing operation.

For example, after the user taps the first confirmation option 802, the terminal device may receive the first confirmation operation performed on the first confirmation option 802, and then may display the prompt information in response to the first confirmation operation. The prompt information is used to guide the user to perform the supplementary photographing on the target object.

In a possible manner, the prompt information may include a plurality of first rendered images (namely, the third rendered image).

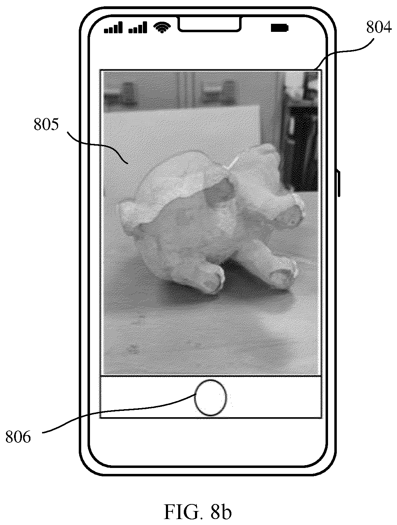

FIG. 8b is a diagram of an example of a photographing interface.

Refer to FIG. 8b. For example, the terminal device may enter the photographing interface 804 in response to the first confirmation operation, where the photographing interface 804 includes a photographing option 806 and a display region 805, and then display a 1^{st} first rendered image in the display region 805 of the photographing interface 804.

Refer to FIG. 8b. For example, after adjusting an angle of the terminal device based on a contour marking line in the 1^{st} first rendered image and an image (with specific transparency) of the target object in a region framed by the contour marking line, the user may tap the photographing option 806 on the photographing interface 804 (that is, perform the photographing operation). Correspondingly, the terminal device may receive the photographing operation, and then may perform, in response to the photographing operation, the supplementary photographing on the target object to obtain a 1^{st} second image, and then display a 2^{nd} first rendered image in a photographing region on the photographing interface.

After adjusting the angle of the terminal device based on a contour marking line in the 2^{nd} first rendered image and an image (with specific transparency) of the target object in a region framed by the contour marking line, the user may tap the photographing option 806 on the photographing interface 804 (that is, perform the photographing operation). Correspondingly, the terminal device may receive the photographing operation, and then may perform, in response to the photographing operation, the supplementary photographing on the target object to obtain a 2^{nd} second image, and then display a 3^{rd} first rendered image in the photographing region on the photographing interface. By analogy, the terminal device may sequentially display first rendered images in the photographing region 805 on the photographing interface 804, and perform, in response to a plurality of photographing operations, the supplementary photographing on the target object to obtain a plurality of second images, to obtain the second image sequence.

S704: Display a target 3D model, where the target 3D model is obtained by filling the hole of the initial 3D model based on the second image sequence.

In a possible manner, after obtaining the second image sequence through photographing, the terminal device may send the second image sequence to the server, and the server fills the hole of the initial 3D model based on the second image sequence, to obtain the target 3D model. Then, the server may send the generated target 3D model to the terminal device, and the terminal device displays the target 3D model.

In a possible manner, after obtaining the second image sequence through photographing, the terminal device may locally fill the hole of the initial 3D model based on the second image sequence, to obtain the target 3D model, and then the terminal device may display the target 3D model.

In a possible manner, after obtaining the second image sequence through photographing, the terminal device may display a second prompt interface, where the second prompt interface is used to ask the user whether to fill the hole of the initial 3D model.

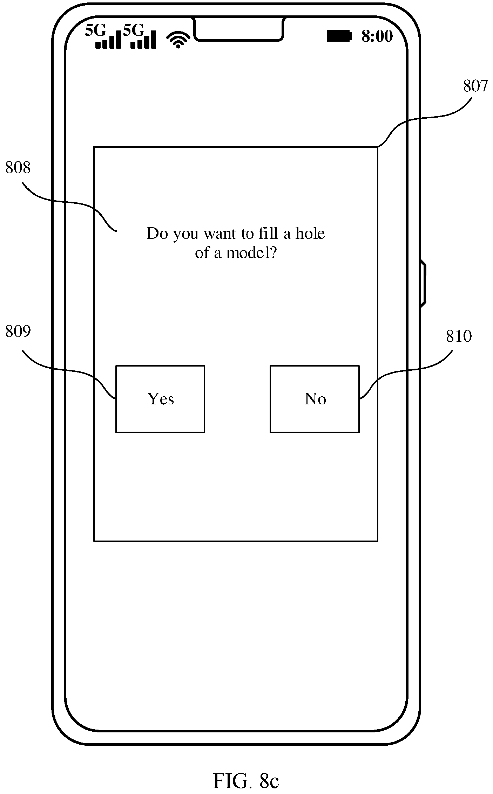

FIG. 8c is a diagram of an example of the second prompt interface.

Refer to FIG. 8c. For example, the second prompt interface 807 may include but is not limited to filling query information 808, a second confirmation option 809, a second denial option 810, and the like. This is not limited in this application.

For example, the filling query information 808 may be, for example, "Do you want to fill a hole of a model?". When the user agrees to fill the hole of the initial 3D model, the user may tap the second confirmation option 809. When the user does not agree to fill the hole of the initial 3D model, the user may tap the second denial option 810.

For example, after the user taps the second confirmation option 809, the terminal device may receive a second confirmation operation performed on the second confirmation option 809, and then may locally fill the hole of the initial 3D model based on the second image sequence in response to the second confirmation operation, to obtain the target 3D model. Alternatively, the terminal device sends the second image sequence to the server, and the server fills the hole of the initial 3D model based on the second image sequence, to obtain the target 3D model, and returns the target 3D model to the terminal device. Then, the terminal device may display the target 3D model.

In this way, when there is the hole in the initial 3D model, the user adjusts a pose of a camera of the terminal device based on guidance of the terminal device, to ensure that the second image sequence obtained through photographing can cover a region that is on a surface of the target object and that corresponds to the hole of the initial 3D model. Therefore, it can be ensured that the target 3D model without the hole can be obtained by performing the supplementary photographing once. In addition, compared with the conventional technology, the user needs to photograph fewer images, thereby shortening photographing time. Compared with remodeling in the conventional technology, in this application, fewer images are required for filling the hole of the initial 3D model. Therefore, a calculation amount for generating the target 3D model is smaller, efficiency of generating the target 3D model without the hole is higher, time for the user to wait for displaying the target 3D model is less, and user experience can be improved.

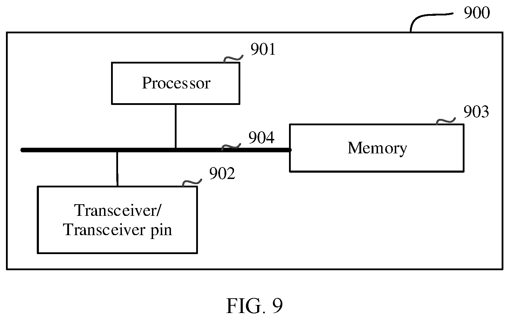

In an example, FIG. 9 is a block diagram of an apparatus 900 according to an embodiment of this application. The apparatus 900 may include a processor 901 and a transceiver/transceiver pin 902, and optionally, further include a memory 903.

Components of the apparatus 900 are coupled together through a bus 904, and in addition to a data bus, the bus 904 further includes a power bus, a control bus, and a status signal bus. However, for clear description, various buses in the figure are referred to as the bus 904.

Optionally, the memory 903 may be configured to store instructions in the foregoing method embodiments. The processor 901 may be configured to execute the instructions in the memory 903, control a receiving pin to receive a signal, and control a sending pin to send a signal.

The apparatus 900 may be the electronic device or a chip of the electronic device in the foregoing method embodiments.

All related content of the steps in the foregoing method embodiments may be cited in function descriptions of corresponding functional modules. Details are not described herein.

An embodiment further provides a computer-readable storage medium. The computer-readable storage medium stores computer instructions. When the computer instructions are run on an electronic device, the electronic device is enabled to perform the related method steps, to implement the 3D model generation method in the foregoing embodiments.

An embodiment further provides a computer program product. When the computer program product runs on a computer, the computer is enabled to perform the related steps, to implement the 3D model generation method in the foregoing embodiments.

In addition, an embodiment of this application further provides an apparatus. The apparatus may be specifically a chip, a component, or a module. The apparatus may include a processor and a memory that are connected. The memory is configured to store computerexecutable instructions, and when the apparatus runs, the processor may execute the computerexecutable instructions stored in the memory, so that the chip performs the 3D model generation method in the foregoing method embodiments.

The electronic device, the computer-readable storage medium, the computer program product, or the chip provided in embodiments is configured to perform the corresponding method provided above. Therefore, for beneficial effect that can be achieved by the electronic device, the computer-readable storage medium, the computer program product, and the chip, refer to the beneficial effect in the corresponding method provided above. Details are not described herein again.

Based on the descriptions of the foregoing implementations, a person skilled in the art may understand that, for the purpose of convenient and brief description, division into the foregoing functional modules is merely used as an example for description. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

Methods or algorithm steps described with reference to content disclosed in embodiments of this application may be implemented by hardware, or may be implemented by a processor executing software instructions. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A 3D model generation method, wherein the method comprises:
obtaining, based on a missing region of an initial 3D model of a target object, a camera pose sequence for performing photographing on the target object, wherein the initial 3D model is obtained by performing 3D modeling based on a first image sequence, and the first image sequence is obtained by photographing around the target object;
obtaining a second image sequence, wherein the second image sequence is an image sequence obtained by performing photographing on the target object based on the camera pose sequence; and
filling the missing region of the initial 3D model based on the second image sequence, to generate a target 3D model.

2. The method according to claim 1, wherein the obtaining, based on a missing region of an initial 3D model of a target object, a camera pose sequence for performing photographing on the target object comprises:
determining a first camera pose based on a center of the missing region; and
determining the camera pose sequence based on the first camera pose.

3. The method according to claim 1, wherein the initial 3D model comprises a plurality of vertices, and the plurality of vertices comprise a plurality of edge vertices located at edges of the missing region; and
the obtaining, based on a missing region of an initial 3D model of a target object, a camera pose sequence for performing photographing on the target object comprises:
determining a first camera pose based on a center of the missing region;
determining a plurality of second camera poses based on the plurality of edge vertices, wherein one edge vertex correspondingly determines one second camera pose; and
determining the camera pose sequence based on the first camera pose and the plurality of second camera poses.

4. The method according to claim 3, wherein the obtaining, based on a missing region of an initial 3D model of a target object, a camera pose sequence for performing photographing on the target object further comprises:
selecting a first edge vertex from the plurality of edge vertices;
determining a plurality of third camera poses based on the first camera pose and a second camera pose corresponding to the first edge vertex, wherein the third camera pose is a pose in which a camera moves between a first position and a second position to perform photographing, the first position is a camera position determined based on the first camera pose, and the second position is a camera position determined based on the second camera pose corresponding to the first edge vertex; and
the determining the camera pose sequence based on the first camera pose and the plurality of second camera poses comprises:
determining the camera pose sequence based on the first camera pose, the plurality of second camera poses, and the plurality of third camera poses.

5. The method according to claim 4, wherein the determining a plurality of third camera poses based on the first camera pose and a second camera pose corresponding to the first edge vertex comprises:
determining, based on the initial 3D model, the first position, and the second position, a moving trajectory of the camera between the first position and the second position; and
determining the plurality of third camera poses based on a plurality of trajectory points on the moving trajectory, wherein one trajectory point on the moving trajectory correspondingly determines one third camera pose.

6. The method according to any one of claims 3 to 5, wherein the second camera pose comprises a second camera orientation and a second photographing distance; and
the determining a plurality of second camera poses based on the plurality of edge vertices comprises:
selecting a second edge vertex from the plurality of edge vertices;
determining the second camera orientation based on a direction from the second edge vertex to a center of the initial 3D model; and
determining the second photographing distance based on a photographing distance corresponding to the first image sequence.

7. The method according to any one of claims 2 to 6, wherein the initial 3D model comprises the plurality of vertices, the plurality of vertices comprise the plurality of edge vertices located at the edges of the missing region, and the first camera pose comprises a first camera orientation and a first photographing distance; and
the determining a first camera pose based on a center of the missing region comprises:
determining the center of the missing region based on the plurality of edge vertices;
determining the first camera orientation based on a direction from the center of the missing region to the center of the initial 3D model; and
determining the first photographing distance based on the photographing distance corresponding to the first image sequence.

8. The method according to any one of claims 1 to 7, wherein the method further comprises:
performing rendering based on the camera pose sequence and the initial 3D model, to obtain a plurality of first rendered images, wherein one first rendered image corresponds to one photographing angle of view, and one photographing angle of view corresponds to one camera pose in the camera pose sequence;
marking contours of the target object in the plurality of first rendered images, to obtain a plurality of second rendered images, wherein the second rendered image comprises a contour marking line; and
adjusting transparency of regions framed by the contour marking lines in the plurality of second rendered images to a preset value, to obtain a plurality of third rendered images, wherein the preset value is between minimum transparency and maximum transparency, and the second image sequence is the image sequence obtained by performing photographing on the target object based on the plurality of third rendered images.

9. The method according to any one of claims 1 to 8, wherein the filling the missing region of the initial 3D model based on the second image sequence, to generate a target 3D model comprises:
generating a second 3D point cloud based on the second image sequence; and
filling the missing region of the initial 3D model based on the second 3D point cloud, to generate the target 3D model.

10. The method according to claim 9, wherein the initial 3D model comprises the plurality of vertices, the plurality of vertices form a first 3D point cloud, the first 3D point cloud is generated based on the first image sequence, and the plurality of vertices comprise the plurality of edge vertices located at the edges of the missing region; and
the filling the missing region of the initial 3D model based on the second 3D point cloud, to generate the target 3D model comprises:
performing point cloud fusion on the second 3D point cloud and the first 3D point cloud, to obtain an intermediate 3D model, wherein the intermediate 3D model comprises a third 3D point cloud, the third 3D point cloud is located in a missing region of the intermediate 3D model, and the third 3D point cloud is a subset of the second 3D point cloud;
gridding the plurality of edge vertices and a plurality of points comprised in the third 3D point cloud; and
generating the target 3D model based on the gridded intermediate 3D model.

11. The method according to any one of claims 1 to 10, wherein the initial 3D model comprises the plurality of vertices and a plurality of triangular faces, and the triangular face is formed by connecting three vertices end to end, and the method further comprises:
when the initial 3D model comprises a side used by only one triangular face, or the initial 3D model comprises a vertex whose quantity of corresponding sides is not equal to a quantity of corresponding triangular faces, determining that there is a missing region in the initial 3D model.

12. The method according to any one of claims 1 to 11, wherein the missing region comprises a hole.

13. A 3D model generation method, wherein the method comprises:
displaying a first prompt interface when there is a missing region in an initial 3D model of a target object, wherein the first prompt interface is used to ask a user whether to perform supplementary photographing on the target object, the initial 3D model is obtained by performing 3D modeling based on a first image sequence, and the first image sequence is obtained by photographing the target object;
displaying prompt information in response to a first confirmation operation, wherein the prompt information is used to guide the user to perform photographing on the target object, the prompt information is generated based on a camera pose sequence for performing photographing on the target object, and the camera pose sequence is determined based on the missing region of the initial 3D model;
Photographing a second image sequence for the target object in response to a photographing operation; and
displaying a target 3D model, wherein the target 3D model is obtained by filling the missing region of the initial 3D model based on the second image sequence.

14. The method according to claim 13, wherein the prompt information comprises a first rendered image, the first rendered image comprises a contour marking line of the target object, transparency of a region framed by the contour marking line is a preset value, the preset value is between minimum transparency and maximum transparency, and the first rendered image is generated based on a second rendered image that is obtained by performing rendering based on the camera pose sequence and the initial 3D model; and
the displaying prompt information comprises:
displaying the first rendered image on a photographing interface.

15. The method according to claim 14, wherein transparency of a region outside the region framed by the contour marking line in the first rendered image is the maximum transparency.

16. The method according to any one of claims 13 to 15, wherein the method further comprises:
displaying a second prompt interface after the second image sequence is photographed, wherein the second prompt interface is used to ask the user whether to fill the missing region of the initial 3D model; and
the displaying a target 3D model comprises:
displaying the target 3D model in response to a second confirmation operation.

17. A 3D model generation system, wherein the 3D model generation system comprises a terminal device and a server, wherein
the server obtains, based on a missing region of an initial 3D model of a target object, a camera pose sequence for performing photographing on the target object, wherein the initial 3D model is obtained by performing 3D modeling based on a first image sequence, and the first image sequence is obtained by photographing around the target object; and sends the camera pose sequence to the terminal device;
the terminal device photographs a second image sequence of the target object based on the camera pose sequence; and sends the second image sequence to the server;
the server fills the missing region of the initial 3D model based on the second image sequence, to generate a target 3D model; and sends the target 3D model to the terminal device; and
the terminal device displays the target 3D model.

18. An electronic device, comprising:
a memory and a processor, wherein the memory is coupled to the processor; and
the memory stores program instructions, and when the program instructions are executed by the processor, the electronic device is enabled to perform the 3D model generation method according to any one of claims 1 to 12.

19. An electronic device, comprising:
a memory and a processor, wherein the memory is coupled to the processor; and
the memory stores program instructions, and when the program instructions are executed by the processor, the electronic device is enabled to perform the 3D model generation method according to any one of claims 13 to 16.

20. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the 3D model generation method according to any one of claims 1 to 12.

21. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the 3D model generation method according to any one of claims 13 to 16.

22. A computer-readable storage medium, wherein the computer-readable storage medium stores a computer program, and when the computer program is run on a computer or a processor, the computer or the processor is enabled to perform the 3D model generation method according to any one of claims 1 to 16.

23. A computer program product, wherein the computer program product comprises a software program, and when the software program is executed by a computer or a processor, steps in the method according to any one of claims 1 to 16 are performed.
